# EUROPEAN PATENT SPECIFICATION

(11) **EP 4 106 055 B1**
(45) Date of publication and mention of the grant of the patent: **24.07.2024**
(21) Application number: 21912317.1
(22) Date of filing: 29.04.2021
(51) Int. Cl.: H01M 4/58, C01C 3/12, H01M 4/04, H01M 4/36, H01M 4/136, H01M 4/1397

(54) **PRUSSIAN BLUE ANALOGUE HAVING CORE-SHELL STRUCTURE, PREPARATION METHOD THEREFOR AND SODIUM-ION SECONDARY BATTERY CONTAINING PRUSSIAN BLUE ANALOGUE**
PREUSSISCHBLAU-ANALOG MIT KERN-HÜLLE-STRUKTUR, VERFAHREN ZU SEINER HERSTELLUNG UND NATRIUM-IONEN SEKUNDÄRBATTERIE DAMIT
ANALOGUE DU BLEU DE PRUSSE PRÉSENTANT UNE STRUCTURE NOYAU-ENVELOPPE, PROCÉDÉ DE PRÉPARATION ASSOCIÉ ET BATTERIE SECONDAIRE AU SODIUM-ION CONTENANT UN ANALOGUE DU BLEU DE PRUSSE

(43) Date of publication of application: 21.12.2022
(73) Proprietor: Contemporary Amperex Technology Co., Limited, Jiaocheng District Ningde Fujian 352100 (CN)
(72) Inventor: ZHANG, Xinxin, Ningde, Fujian 352100 (CN); GUO, Yongsheng, Ningde, Fujian 352100 (CN); OUYANG, Chuying, Ningde, Fujian 352100 (CN)
(74) Representative: Ziebig Hengelhaupt Intellectual Property Attorneys Patentanwaltskanzlei PartGmbB
(86) International application number: PCT/CN2021/090979
(87) International publication number: WO 2022/226892

(56) References cited:
- CN-A- 109 065 883
- CN-A- 110 224 130
- CN-A- 112 174 167
- JP-A- 2018 106 911
- US-A1- 2014 127 560
- US-A1- 2014 127 560

## Description

### Technical Field

The present application relates to the field of sodium-ion secondary batteries, particularly to a prussian blue analog having a core-shell structure, and to a method for preparing the prussian blue analog having a core-shell structure, as well as a sodium-ion secondary battery, a battery module, a battery pack and a powered device comprising the same.

### Background Art

In recent years, with the gradual development and application of lithium-ion batteries from portable electronic devices to high-power electric vehicles, large-scale energy storage power stations and smart grids, the demand for lithium-ion batteries is increasing; however, the limited lithium resources have limited the sustainable development of lithium-ion batteries. Sodium, which is in the same main group as lithium, has similar chemical properties to lithium and is abundant. Therefore, sodium-ion batteries that work in a similar way to lithium-ion batteries are being developed, and are expected to be an important supplement for lithium-ion batteries in large-scale energy storage applications.

As a positive electrode material for a sodium-ion secondary battery, prussian blue analog (hereinafter sometimes referred to as PBA) has significant advantages in both specific capacity and ion transport due to its special open-framework crystal structure. The chemical formula of PBA can generally be written as NaₓMnFe(CN)₆. The transition metal ions Mn and Fe and -C≡N- are arranged according to Mn-C≡N-Fe to form a three-dimensional cubic frame structure, and the transition metal atoms Mn and Fe are located at the vertex positions of a face-centered cubic structure, connected by the -C≡N- located on the edge. Its theoretical specific capacity is close to 170mAh/g, and the voltage platform is between 3-3.5V; and meanwhile, the relatively large void size of the cube (diameter being of about 4.6Å) and the relatively wide channel (about 4.6Å) in the [100] direction greatly facilitate the rapid migration of alkali metal ions with large ionic radii.
US 2014/127560 A1 discloses a first Prussian Blue analogue of general formula AₓP_{y[}R(CN)₆₋ⱼLⱼ]_{z}.nH₂O, wherein A is a cation, P is a metal cation, R is a transition metal cation and L is a ligand substitutable in the place of CN-ligand, and 0 ≤j ≤6, 0 ≤x ≤2, 0 ≤y ≤4, 0 ≤z ≤1 and 0 ≤n ≤5. A conformal layer is disposed on said first Prussian Blue analogue material which can be another Prussian Blue analogue material.

However, the existing PBA materials are prone to gradual degradation of electrochemical performance during long-term storage. Therefore, although PBA material has a series of commercializable advantages of high capacity, high voltage platform, rapid sodium-ion transport channel, low cost, and simple preparation, etc., it is not favorable for industrial application due to the difficulty of long-term storage. If the deterioration of electrochemical performance of PBA material during long-term storage can be suppressed, its electrochemical performance and stability are expected to be greatly improved, thus greatly promoting the application process of PBA in sodium-ion secondary batteries.

Therefore, it is of great significance in the field of sodium-ion secondary batteries to provide a prussian blue analog which is stable during long-term storage.

### Summary of the Invention

### Technical problems to be solved by the invention

The present application has been made in view of the above-mentioned topics, and an objective thereof is to provide a prussian blue analog as a positive electrode material for a sodium-ion secondary battery; the prussian blue analog is not prone to deterioration after long-term storage, and can still maintain excellent electrochemical performances such as cycling performance, and is suitable for industrial application in sodium-ion secondary batteries.

Through extensive research, the inventors of the present application have found that the deterioration of the electrochemical performances of the PBA material may be related to the water absorption of the PBA material. Previously, there had been a technique of dehydrating the PBA material by means of vacuum heating. For example, the dehydration of MnFe-PBA by vacuum drying at 100°C for 30h under a high vacuum of 15mTorr can reduce the water content of MnFe-PBA as low as 0.5wt% (0.08H₂O/f.u.) (Journal of the American Chemical Society, 2015, 137(7): 2658-2664). However, such dehydration process is time-consuming and costly. Moreover, the PBA material is easy to absorb water, and even if water molecules are removed by high temperature and vacuum, the dehydrated PBA material easily absorbs water again when stored in air, resulting in rapid degradation of its electrochemical performances, especially cycling performance, and possibly sodium precipitation during charge-discharge cycles.

### Technical solutions for problem solving

In order to achieve the above objective, in a first aspect, the present application provides a prussian blue analog having a core-shell structure, which has a core and a cladding layer that clads the core, wherein
the chemical formula of the core is the following Formula 1,

   NaₓMn[Fe(CN)₆]_{δ}·zH₂O Formula 1
wherein 0<x≤2, 0<δ≤1, and 0≤z≤10,
the chemical formula of the cladding layer is the following Formula 2,

   A_{y}Mn[Fe(CN)₆]_{α}·wH₂O Formula 2
wherein the A is an alkali metal other than sodium, and 0<y≤2, 0<α≤1, and 0≤w≤10.

By using the prussian blue analog having the chemical composition A_{y}Mn[Fe(CN)₆]_{α} as the shell to clad the surface of the sodium-containing prussian blue analog, the shell can especially effectively hinder the entry of water molecules into the core-shell structure, so that the PBA material is not easy to absorb water, thus greatly improving the storage stability of the PBA material at normal temperatures and pressures, greatly reducing the manufacturing cost at the subsequent battery cell level, while improving the structural stability of the PBA material, and meeting the requirements of sodium-ion secondary batteries. Furthermore, the preparation cost of the PBA material with the core-shell structure is low.

The use of the transition metal ions Mn and Fe can ensure the structural integrity of the PBA material, while enabling the PBA material to have good electrochemical performances such as maintaining electrochemical capacity.

In any of embodiments, the A is at least one of K, Rb and Cs. Thus, by selecting the above-mentioned ions as the A ions, a good blocking effect on the transport of water molecules is achieved.

In any of embodiments, in Formula 1, 0.7≤δ≤1; and/or, in Formula 1 and Formula 2, the x and y are each independently 0.5-2, and optionally the x and y are each independently 1.5-2. The electrochemical capacity of the material can be increased by selecting a high δ and/or x and/or y value.

In any of embodiments, the thickness of the cladding layer is 100nm or less, optionally 60nm or less, more optionally 50nm or less, and optionally in a range of 5nm-40nm, and further optionally in a range of 10nm-20nm. If the thickness of the cladding layer is within the above-mentioned numerical range, the hindering effect on water is sufficient, the electrochemical capacity of the material is not easily reduced, while the rapid transport of sodium ions is facilitated.

In any of embodiments, the cladding amount of the cladding layer is 10 wt% or less, optionally 1 wt%-5 wt%. If the cladding amount of the cladding layer is within the above-mentioned range, the hindering effect on water is sufficient, the electrochemical capacity of the material is not easily reduced, while the rapid transport of sodium ions is facilitated.

In any of embodiments, the prussian blue analog has a particle size of 100nm to 50µm. By selecting the above-mentioned particle size range, it is helpful for the material to maintain good ion and electron transport properties.

A second aspect of the present application provides a method for preparing a prussian blue analog having a core-shell structure, the method comprising the steps of:
1) adding a prussian blue analog particle to a solvent 1 and dispersing to obtain a suspension, the chemical formula of the prussian blue analog particle being the following Formula 1,

   NaₓMn[Fe(CN)₆]_{δ}·zH₂O Formula 1

   wherein 0<x≤2, 0<δ≤1, and 0≤z≤10;
2) dissolving a soluble salt containing a transition metal element L, wherein L is Mn, in a solvent 2 to make a solution c;
3) dissolving a soluble salt containing an alkali metal element A other than sodium and a soluble transition metal cyano complex containing a transition metal element M, wherein M is Fe, in a solvent 3 to make a solution d;
4) adding the solutions c and d dropwise to the suspension obtained in step 1) under stirring, and filtering the suspension to obtain a precipitate;
5) washing and drying the precipitate obtained in step 4) to obtain a prussian blue analog having a core-shell structure, wherein the prussian blue analog having a core-shell structure has a core and a cladding layer that clads the core, the core is the prussian blue analog particle, and the chemical formula of the cladding layer is the following Formula 2,

   A_{y}Mn[Fe(CN)₆]_{α}·wH₂O Formula 2

   wherein the A is an alkali metal other than sodium, and 0<y≤2, 0<α≤1, and 0≤w≤10.

By the above-mentioned preparation method, a prussian blue analog having chemical composition A_{y}Mn[Fe(CN)₆]_{α} is formed as an outer shell on the surface of a sodium-containing prussian blue analog particle, and the outer shell obtained by the method is uniform and can completely clad the sodium-containing prussian blue analog particle, so that the entry of water molecules into the core-shell structure can be especially effectively hindered, so that the PBA material is not easy to absorb water, thus greatly improving the storage stability of the PBA material at normal temperatures and pressures, and while improving the structural stability of the material. Also, the method has low cost.

In any of embodiments, the prussian blue analog particle in step 1) is prepared by a method comprising the steps of:
i) dissolving a soluble salt containing P as a transition metal element, wherein P is Mn, and a slow-releasing agent containing Na in water to make a solution a;
ii) dissolving a soluble transition metal cyano complex containing R, wherein R is Fe, as a transition metal element in water to make a solution b;
iii) adding the solution a dropwise to the solution b under stirring, and after the completion of dropwise addition, aging and filtering to obtain a precipitate; and
iv) washing and drying the precipitate obtained in step iii) to obtain the prussian blue analog particle.

The above-mentioned method is helpful in preparing structurally stable prussian blue analog particle.

In any of embodiments, the slow-releasing agent containing Na in step i) is at least one selected from sodium citrate, sodium ascorbate, disodium ethylenediamine tetraacetate, tetrasodium ethylenediamine tetraacetate, sodium chloride, sodium sulfate and sodium acetate. By selecting the above-mentioned slow-releasing agent, it is helpful in obtaining a more uniform cladding layer.

In any of embodiments, the soluble transition metal cyano complex in step ii) is a divalent transition metal sodium cyanide.

In any of embodiments, in the step iii), the solution is maintained in a temperature range of 20°C-120°C, optionally in a temperature range of 70°C-90°C, and optionally at 80°C. By controlling the temperature of the solution in the above-mentioned range, a better morphology of the cladding layer can be obtained.

In any of embodiments, the respective solvents 1, 2 and 3 in steps 1), 2) and 3) may be the same or different, each being independently selected from at least one of deionized water and an organic solvent, optionally the organic solvent is selected from at least one of alcohol, ketone, and halogenated hydrocarbon, and optionally is selected from at least one of methanol, glycerol, acetone, and ethanol. By selecting the above-mentioned solvents, it is easy to obtain a uniform cladding layer and ensure the electrochemical capacity of the PBA material.

In any of embodiments, the soluble transition metal cyano complex in step 3) is a divalent transition metal sodium cyanide.

In any of embodiments, in step 4), the rates of dropwise addition of the solution c and the solution d are each independently in a range of 0.1 ml/min-10 ml/min, optionally in a range of 0.1 ml/min-5ml/min, for example in a range of 0.1 ml/min-2ml/min; or in step 4), the reaction system is maintained in a temperature range of 20°C-120°C, optionally in a temperature range of 70°C-90°C, and optionally at 80°C. By controlling the rate or temperature of dropwise addition, a better morphology of the cladding layer can be obtained.

A third aspect of the present application provides a sodium-ion secondary battery comprising the prussian blue analog having a core-shell structure of the first aspect of the present application or the prussian blue analog having a core-shell structure obtained by the method of the second aspect of the present application.

A fourth aspect of the present application provides a battery module including the sodium-ion secondary battery of the third aspect of the present application.

A fifth aspect of the present application provides a battery pack including the battery module of the fourth aspect of the present application.

A sixth aspect of the present application provides a powered device including one or more selected from the sodium-ion secondary battery of the third aspect of the present application, the battery module of the fourth aspect of the present application, or the battery pack of the fifth aspect of the present application.

### Description of Drawings

In order to illustrate the technical solutions of the present application more clearly, a brief introduction will be given below of the drawings that are required to be used in the examples of the present application; it is apparently that the drawings described below are only some examples of the present application, and for those of ordinary skill in the art, according to the drawings, other drawings can also be obtained without involving any creative efforts.

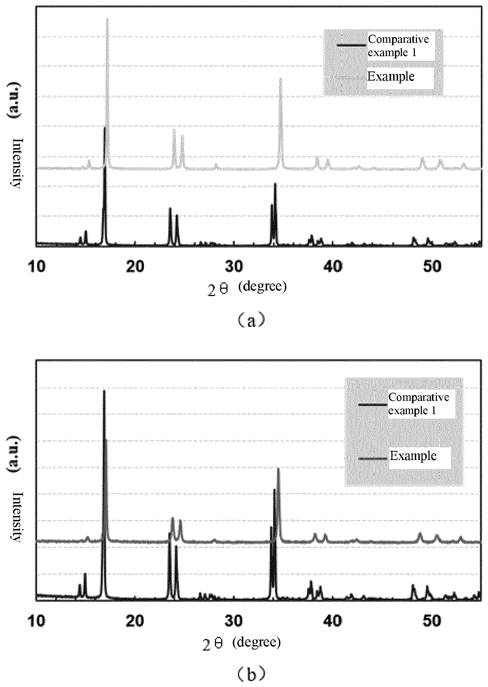

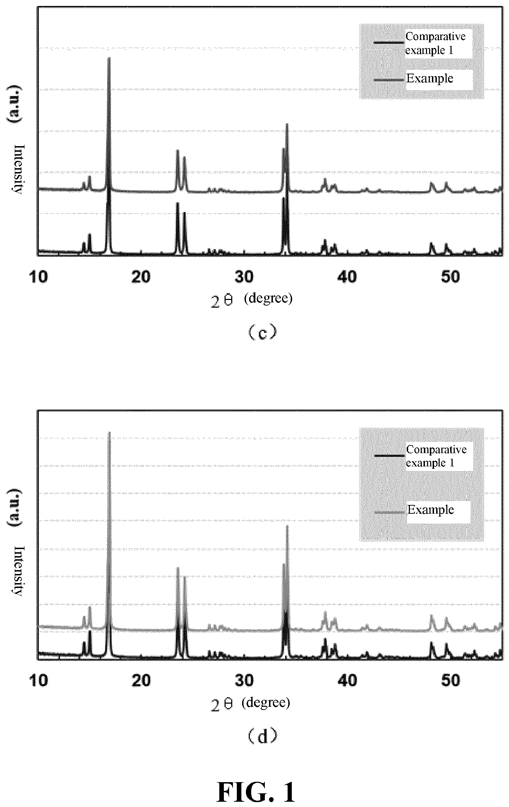

Fig. 1 shows the XRD patterns of the PBA materials prepared in Examples 1-4 and Comparative example 1 of the present application.
Fig. 2 shows the SEM and EDS images of the PBA material prepared in Example 1 of the present application.
Fig. 3 shows the thermogravimetric analysis profiles of the water content of the PBA materials prepared in Example 1 and Comparative example 1 of the present application.
Fig. 4 is a graph showing the water content in humid air versus time for the PBA materials prepared in Example 1 and Comparative example 1 of the present application.
Fig. 5 shows the graphs of long-term cycling performance of sodium-ion secondary batteries when charging and discharging at a current density of 150mA/g, wherein the PBA materials prepared in Examples and Comparative example of the present application are each used as the positive electrode active materials in the sodium-ion secondary batteries.
Fig. 6 shows the rate curves of sodium-ion secondary batteries when charging at different current densities and discharging at a rate of 0.33C, wherein the PBA materials prepared in Example 1 and Comparative example 1 of the present application are each used as the positive electrode active materials in the sodium-ion secondary batteries.
Fig. 7 is a K element distribution diagram obtained by elemental analysis of the cross section of the PBA material of Example 1 using a transmission electron microscope (TEM) and an energy spectrometer.
Fig. 8 shows the photographs of positive electrode sheets prepared with the PBA materials of Comparative example 1 and Example 1 after 400 charging-discharging cycles.
Fig. 9 is a schematic diagram of a secondary battery according to an embodiment of the present application.
Fig. 10 is an exploded view of the secondary battery according to an embodiment of the present application shown in Fig. 9.
Fig. 11 is a schematic diagram of a battery module according to an embodiment of the present application.
Fig. 12 is a schematic diagram of a battery pack according to an embodiment of the present application.
Fig. 13 is an exploded view of the battery pack according to an embodiment of the present application shown in Fig. 12.
Fig. 14 is a schematic diagram of a powered device using a secondary battery according to an embodiment of the present application.

### Description of reference numerals:

1 Battery pack
2 Upper box
3 Lower box
4 Battery module
5 Secondary battery
51 Case
52 Electrode assembly
53 Cover plate

### Detailed Description

For the sake of brevity, the present application specifically discloses some numerical ranges. However, any lower limit can be combined with any upper limit to form a range not explicitly recited; and any lower limit can be combined with another lower limit to form a range not explicitly recited, and likewise, any upper limit can be combined with any another upper limit to form a range not explicitly recited. In addition, each individually disclosed point or individual numerical value can itself be used as a lower limit or an upper limit to combine with any another point or individual numerical value or with another lower limit or upper limit to form a range not explicitly recited.

### Prussian blue analog having core-shell structure

The prussian blue analog having a core-shell structure of the present application has a core and a cladding layer that clads the core, wherein

The chemical formula of the core is the following Formula 1,

NaₓMn[Fe(CN)₆]_{δ}·zH₂O Formula 1

wherein 0<x≤2, 0<δ≤1, and 0≤z≤10,

The chemical formula of the cladding layer is the following Formula 2,

A_{y}Mn[Fe(CN)₆]_{α}·wH₂O Formula 2

wherein the A is an alkali metal other than sodium, and 0<y≤2, 0<α≤1, and 0≤w≤10.

Without wishing to be bound by any theory, it is believed that the modification of the PBA surface with alkali metal ions having a large ionic radius allows the large-radius ions to occupy positions where water of crystallization might otherwise exist, reducing the water of crystallization in the lattice structure, and thus the resulting prussian blue analog having a core-shell structure has less structural defects, crystallization is complete, and its electrochemical performances such as reversible specific capacity, cycling performance, etc. can be improved. Also, the surface cladding of the prussian blue analog having the chemical composition NaₓMn[Fe(CN)₆]_{δ} as the core with the prussian blue analog having the chemical composition A_{y}Mn[Fe(CN)₆]_{α} as the outer shell is beneficial to obtain a uniform core-shell structure, and the prussian blue analog having the chemical composition A_{y}Mn[Fe(CN)₆]_{α} as the outer shell clads the entire surface of the core, which has an excellent effect of hindering the entry of water molecules, so that the material has the property of not easily absorbing water, and the storage stability is greatly improved.

The transition metal elements are Fe and Mn. By selecting these transition metal ions, the material can have the desired electrochemical performance and electrochemical capacity while ensuring structural integrity.

In some embodiments, A is selected from at least one of K, Rb and Cs. By appropriately selecting the alkali metal element A, a good blocking effect on the transport of water molecules is realized, which is beneficial to achieve a better effect of reducing the water absorption of the prussian blue analog.

In some embodiments, δ in Formula 1 satisfies 0.7≤δ≤1. By selecting the numerical range of δ, the prussian blue analog can have a larger capacity and a more stable structure when used as the positive electrode material for sodium-ion secondary batteries.

In some embodiments, in Formula 1 and Formula 2, the x and y are each independently, for example, in a range of 0.5-2, for example in a range of 1.5-2. By appropriately selecting the numerical ranges of x and y, the prussian blue analog can have a larger capacity when used as the positive electrode material for sodium-ion secondary batteries.

In some embodiments, the thickness of the cladding layer is 100 nm or less, for example 60nm or less or 50nm or less. For example, the thickness of the cladding layer may be 5nm-40nm, for example 10nm-20nm. The inventors have found that when the thickness of the cladding layer is within the given range, it is possible to ensure a higher capacity of the PBA material as the positive electrode active material while improving the water absorption resistance and electrochemical performance.

In some embodiments, the cladding amount of the cladding layer is 10wt% or less, for example 1wt%-5wt%. The cladding amount is defined as the ratio of the mass of the cladding layer to the total mass of the entire core-shell structured particle. When the cladding amount of the cladding layer is within the given range, it is possible to ensure a higher capacity of the PBA as the positive electrode active material while improving the water absorption resistance and electrochemical performance.

In the present application, the thickness of the cladding layer can be tested using equipment and methods known in the art. By way of example, thickness and uniformity can be measured using focused ion beam technology (FIB) + transmission electron microscopy (TEM).

In the present application, the cladding amount of the cladding layer can be tested using equipment and methods known in the art. By way of example, measurements can be made using Inductive Coupled Plasma Emission Spectrometer (ICP).

In some embodiments, the particle size of the prussian blue analog is 100nm to 50µm, for example 200nm to 30µm. By controlling the particle size of the prussian blue analog within the above range, it is beneficial to obtain a uniform cladding layer and a smaller cladding layer thickness, so that the material maintains better ion and electron transport properties.

In the present application, the particle size of the prussian blue analog can be tested using equipment and methods known in the art. For example, using a scanning electron microscope (e.g. ZEISS Sigma 300) and referring to JY/T010-1996, a scanning electron microscope (SEM) image of the prussian blue analog is obtained, and the particle size (i.e., the distance between the furthest two points on the particle) of the particle in the test area is read.

In some embodiments, the specific surface area of the prussian blue analog is 1-20m²/g, for example 5-18 m2/g.

In the present application, the specific surface area of the prussian blue analog can be tested using equipment and methods known in the art. For example, according to the national standard GB/T 19587-2004, after the adsorption amount of gas on the solid surface under different relative pressures is measured at a constant low temperature, the monolayer adsorption amount of the sample is calculated based on the multilayer adsorption theory of Brunauer-Emmett-Teller (BET) and the equation thereof, and thus the specific surface area of the solid is calculated.

### Method for preparing prussian blue analog having core-shell structure

The present application further provides a method for preparing a prussian blue analog having a core-shell structure, the method comprising the steps of:
1) adding a prussian blue analog particle to a solvent 1 and dispersing to obtain a suspension, the chemical formula of the prussian blue analog particle being the following Formula 1,

   NaₓMn[Fe(CN)₆]_{δ}·zH₂O Formula 1

   wherein 0<x≤2, 0<δ≤1, and 0≤z≤10;
2) dissolving a soluble salt containing a transition metal element L, wherein L is Mn, in a solvent 2 to make a solution c;
3) dissolving a soluble salt containing an alkali metal element A other than sodium and a soluble transition metal cyano complex containing a transition metal element M, wherein M is Fe, in a solvent 3 to make a solution d;
4) adding the solutions c and d dropwise to the suspension obtained in step 1) under stirring, and filtering the suspension to obtain a precipitate;
5) washing and drying the precipitate obtained in step 4) to obtain a prussian blue analog having a core-shell structure, wherein the prussian blue analog having a core-shell structure has a core and a cladding layer that clads the core, the core is the prussian blue analog particle, and the chemical formula of the cladding layer is the following Formula 2,

   A_{y}Mn[Fe(CN)₆]_{α}·wH₂O Formula 2

   wherein the A is an alkali metal other than sodium, and 0<y≤2, 0<α≤1, and 0≤w≤10.

The descriptions and definitions of A, x, y, δ, α, z and w hereinabove in the section of "prussian blue analog having a core-shell structure" also apply to the methods of the present application.

The solvents in steps 1), 2) and 3) may be the same or different, may be common solvents in the art, and can be selected by those skilled in the art according to actual needs. In some embodiments, the solvents in steps 1), 2) and 3) are each independently selected from at least one of deionized water and an organic solvent, for example at least one of deionized water, alcohol, ketone, halogenated hydrocarbon. In some embodiments, the solvents in steps 1), 2) and 3) are each independently selected from at least one of deionized water, methanol, glycerol, acetone and ethanol. In a case where the solvent is selected from deionized water, methanol, glycerol, acetone and ethanol, when the thickness of the cladding layer is <20 nm and the cladding amount is <5wt%, it is also easy to obtain a uniform cladding layer, and it is possible to obtain a reversible specific capacity comparable to that of a PBA material without a cladding layer while ensuring a low water absorption of the material.

The dispersion in step 1) can be carried out by those skilled in the art by choosing an appropriate method. In some embodiments, dispersion is assisted by sonication and stirring in step 1).

In some embodiments, in step 2), a slow-releasing agent may also be added when preparing the solution c. In a case of adding the slow-releasing agent, for example, the molar ratio of the transition metal element L, wherein L is Mn, to the slow-releasing agent is 1:0.1-10. In some embodiments, the molar ratio of the transition metal element L, wherein L is Mn, to the slow-releasing agent is 1:1-7, for example 1:1-5, for example 1:3. By adding an appropriate amount of the slow-releasing agent, the degree of uniformity of the cladding layer can be controlled to obtain a more uniform cladding layer.

In the present application, the slow-releasing agent is a chelating agent, the anion of which has the effect of complexing with the transition metal ions, such that the transition metal ions do not exist in the solution alone, or is a sodium-containing compound which readily dissociates sodium ions in the solution.

In some embodiments, the slow-releasing agent in step 2) is at least one selected from sodium citrate, sodium ascorbate, disodium ethylenediamine tetraacetate, tetrasodium ethylenediamine tetraacetate, sodium chloride, sodium sulfate and sodium acetate. By selecting the above-mentioned slow-releasing agent, a more uniform cladding layer can be obtained by controlling the reaction rate. The concentration of the slow-releasing agent in the solution is, for example, in a range of 0.01 mol/L -10mol/L.

The anion of the soluble salt containing the transition metal element L, wherein L is Mn, in step 2) is not particularly limited, as long as the salt is a soluble salt. In some embodiments, the soluble salt containing the transition metal element L, wherein L is Mn, in step 2) is a divalent sulfate, a nitrate, a chloride or a salt of a weak acid, such as an oxalate. Its concentration in the solution is, for example, in a range of 0.01 mol/L-1mol/L.

The anion of the soluble salt containing the alkali metal element A other than sodium in step 3) is not particularly limited, as long as the salt is a soluble salt. In some embodiments, in step 3), the soluble salt containing the alkali metal element A other than sodium is a sulfate, a nitrate, a chloride or a salt of a weak acid. Its concentration in the solution is, for example, in a range of 0.001 mol/L-1mol/L.

In some embodiments, the soluble transition metal cyano complex in step 3) is a divalent transition metal sodium cyanide. Its concentration in the solution is, for example, in a range of 0.01 mol/L-1mol/L.

In some embodiments, in step 4), after the completion of dropwise addition of all the solutions c and d, stirring of the reaction system is continued for 0.01h-48h, for example 12h.

In some embodiments, in step 4), the reaction system is maintained in a temperature range of 20°C-120°C, for example 70°C-90°C, for example at 80°C. By controlling the temperature of the reaction system within the above range, the uniformity of the cladding layer can be controlled to obtain a better morphology of the cladding layer.

In some embodiments, in step 4), the rate of dropwise addition of each solution is independently in a range of 0.1 ml/min-10ml/min, optionally in a range of 0.1 ml/min-5ml/min, for example in a range of 0.1 ml/min-2ml/min. By controlling the rate of dropwise addition of the solution within the above range, the uniformity of the cladding layer can be controlled to obtain a better morphology of the cladding layer.

In some embodiments, in step 4), the stirring rate is in a range of 200rpm-1200rpm.

The drying in step 5) can be carried out by those skilled in the art by choosing an appropriate drying method. In some embodiments, in step 5), the drying is carried out by vacuum drying, for example in a temperature range of 0-300°C, for example 150°C; and the vacuum degree is for example 10-15mTorr.

In some embodiments, the prussian blue analog particle in step 1) is prepared by a method comprising the steps of:
i) dissolving a soluble salt containing P as a transition metal element, wherein P is Mn, and a slow-releasing agent containing Na in water to make a solution a;
ii) dissolving a soluble transition metal cyano complex containing R, wherein R is Fe, as a transition metal element in water to make a solution b;
iii) adding the solution a dropwise to the solution b under stirring, and after the completion of dropwise addition, aging and filtering to obtain a precipitate;
iv) washing and drying the precipitate obtained in step iii) to obtain the prussian blue analog particle.

The PBA material prepared by the method has less defects and high sodium content, which is helpful in obtaining a structurally stable material.

In some embodiments, in step i), the molar ratio of the transition metal element P, wherein P is Mn, to the slow-releasing agent is 1:0.1-10. In some embodiments, the molar ratio of the transition metal element P, wherein P is Mn, to the slow-releasing agent is 1:1-5, for example 1:3.2. By controlling the molar ratio within the above range, the uniformity of the cladding layer can be controlled to obtain a better morphology of the cladding layer.

The anion of the soluble salt containing the transition metal element P, wherein P is Mn, in step i) is not particularly limited, as long as the salt is a soluble salt. In some embodiments, the soluble salt containing the transition metal element P, wherein P is Mn, in step i) is a divalent sulfate, a nitrate, a chloride or a salt of a weak acid, such as an oxalate. Its concentration in the solution is, for example, in a range of 0.01 mol/L-1mol/L.

In some embodiments, the slow-releasing agent containing Na in step i) is at least one selected from sodium citrate, sodium ascorbate, disodium ethylenediamine tetraacetate, tetrasodium ethylenediamine tetraacetate, sodium chloride, sodium sulfate and sodium acetate. By selecting the above-mentioned slow-releasing agent, a more uniform cladding layer can be obtained by controlling the reaction rate. The concentration of the slow-releasing agent in the solution is, for example, in a range of 0.01 mol/L -10mol/L.

In some embodiments, in step ii), a protective gas is introduced into the vessel in which the solution b is placed to protect the transition metal element against oxidation. The protective gas can be an appropriate inert gas selected by those skilled in the art. In some embodiments, in step ii), the protective gas is at least one of N₂, Ar and He.

In some embodiments, in step ii), a soluble sodium salt can also be added when preparing the solution b. For example, the soluble sodium salt may be at least one selected from sodium citrate, disodium ethylenediamine tetraacetate, tetrasodium ethylenediamine tetraacetate, sodium chloride, sodium sulfate and sodium acetate. In a case where a soluble sodium salt is added, for example, the molar ratio of the soluble transition metal cyano complex containing the transition metal element R, wherein R is Fe, to the soluble sodium salt is 1:0. 1-100. The concentration of the soluble sodium salt in the solution is, for example, in a range of 0.01 mol/L-10mol/L. By adding the soluble sodium salt, the sodium source can be supplemented, and the morphology of the core particle can be adjusted.

In some embodiments, the soluble transition metal cyano complex in step ii) is a divalent transition metal sodium cyanide. Its concentration in the solution is, for example, in a range of 0.01 mol/L-1mol/L.

In some embodiments, in step iii), the stirring rate is in a range of 200rpm-1200rpm.

In some embodiments, in step iii), the solution is maintained in a temperature range of 20°C-120°C, for example 70°C-90°C, for example at 80°C. By controlling the temperature of the solution within the above range, the uniformity of the cladding layer can be controlled to obtain a better morphology of the cladding layer.

In some embodiments, in step iii), the solution a is added dropwise at a rate of 0.1ml/min-10ml/min, for example at a rate of 1ml/min. By controlling the rate of dropwise addition of the solution within the above range, the uniformity of the cladding layer can be controlled to obtain a better morphology of the cladding layer.

In some embodiments, instep iii), the aging is performed for 0.01h-48h, for example for 12h, and the aging can be performed, for example, under stirring.

The washing in step iv) can be carried out by those skilled in the art by choosing an appropriate solvent. In some embodiments, in step iv), the washing can be performed using a mixture of deionized water and ethanol, as well as ethanol or acetone etc., and can be performed one or more times.

The drying in step iv) can be carried out by those skilled in the art by choosing an appropriate drying method. In some embodiments, in step iv), the drying is carried out by vacuum drying, for example in a temperature range of 0-300°C, for example 150°C; and the vacuum degree is for example 10-15mTorr.

### Positive electrode sheet

The present application further provides a positive electrode sheet for sodium-ion secondary batteries, the positive electrode sheet including a positive electrode current collector and the prussian blue analog having a core-shell structure of the first aspect of the present application or the prussian blue analog having a core-shell structure prepared by the method of the second aspect of the present application provided on the current collector.

At least one surface of the positive electrode current collector is provided with a positive electrode film layer comprising the prussian blue analog having a core-shell structure of the first aspect of the present application.

By way of example, the positive electrode current collector has two opposite surfaces in the direction of its own thickness, and the positive electrode film layer is provided on either or both of the two opposite surfaces of the positive electrode current collector.

In some embodiments, the positive electrode current collector can be a conventional metal foil or a composite current collector. For example, as the metal foil, an aluminium foil can be used. The composite current collector may include a high molecular material substrate layer and a metal layer formed on at least one surface of the high molecular material substrate layer. The composite current collector can be formed by forming the metal material (for example, aluminium, aluminium alloy, nickel, nickel alloy, titanium, titanium alloy, silver and silver alloy, etc.) on the high molecular material substrate (such substrate as polypropylene (PP), polyethylene terephthalate (PET), polybutylene terephthalate (PBT), polystyrene (PS), polyethylene (PE), etc.). By way of example, the positive electrode current collector may be an aluminium foil, such as a 5-30µm carbon-coated aluminium foil.

The positive electrode film layer further optionally comprises a conductive agent. However, the type of the conductive agent is not particularly limited, and those skilled in the art can make a selection according to the actual needs. By way of example, the conductive agent for the positive electrode film layer may be selected from one or more of superconducting carbon, acetylene black, carbon black, Ketjen black, carbon dot, carbon nanotube, graphene, and carbon nanofiber.

In the present application, the positive electrode sheet can be prepared according to the methods known in the art. By way of example, the positive electrode active material, the conductive agent and the binder of the present application can be dispersed in a solvent (for example, N-methyl pyrrolidone (NMP)) to form a uniform positive electrode slurry; the positive electrode slurry is coated on the positive electrode current collector, and after oven drying, cold pressing and other procedures, the positive electrode sheet is obtained.

In some embodiments, the positive electrode sheet is coated on the current collector with: 70-90 parts by weight of the prussian blue analog having a core-shell structure, 1-20 parts by weight of the conductive agent and 1-10 parts by weight of the binder.

### Sodium-ion secondary battery

The present application further provides a sodium-ion secondary battery including the above-mentioned positive electrode sheet.

Typically, a sodium-ion secondary battery includes a positive electrode sheet, a negative electrode sheet, an electrolyte, and a separator. During charging and discharging of the battery, active ions are intercalated and deintercalated back and forth between the positive electrode sheet and the negative electrode sheet. The electrolyte serves to conduct ions between the positive electrode sheet and the negative electrode sheet. The separator is provided between the positive electrode sheet and the negative electrode sheet, and mainly functions to prevent a short circuit between the positive electrode and the negative electrode while allowing ions to pass through.

### [Negative electrode sheet]

The negative electrode sheet includes a negative electrode current collector and a negative electrode film layer provided on at least one surface of the negative electrode current collector, wherein the negative electrode film layer comprises a negative electrode active material.

By way of example, the negative electrode current collector has two opposite surfaces in the direction of its own thickness, and the negative electrode film layer is provided on either or both of the two opposite surfaces of the negative electrode current collector.

In some embodiments, the negative electrode current collector can be a metal foil or a composite current collector. For example, as the metal foil, an aluminium foil can be used. The composite current collector may include a high molecular material substrate layer and a metal layer formed on at least one surface of the high molecular material substrate. The composite current collector can be formed by forming the metal material (for example, aluminium, aluminium alloy, nickel, nickel alloy, titanium, titanium alloy, silver and silver alloy, etc.) on the high molecular material substrate (such substrate as polypropylene (PP), polyethylene terephthalate (PET), polybutylene terephthalate (PBT), polystyrene (PS), polyethylene (PE), etc.).

In the secondary battery of the present application, the negative electrode film layer generally comprises a negative electrode active material and an optional binder, an optional conductive agent and other optional auxiliaries, and is usually formed by coating a negative electrode slurry and drying. The negative electrode slurry is generally formed by dispersing the negative electrode active material as well as the optional conductive agent and the binder, etc. in a solvent and uniformly stirring. The solvent may be N-methyl pyrrolidone (NMP) or deionized water.

By way of example, the conductive agent may be selected from one or more of superconducting carbon, acetylene black, carbon black, Ketjen black, carbon dot, carbon nanotube, graphene, and carbon nanofiber.

By way of example, the binder may be selected from one or more of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA) and carboxymethyl chitosan (CMCS).

Other optional auxiliaries are, for example, thickeners (e. g., sodium carboxymethyl cellulose (CMC-Na)) and the like.

By way of example, the negative electrode active material may be selected from one or more of carbon material, alloy material, transition metal oxide and sulfide, phosphorus-based material, and titanate material. For example, as the negative electrode active material, soft carbon, hard carbon, silicon-based material, tin-based material, and the like may be cited. The silicon-based material may be selected from one or more of elemental silicon, silicon-oxygen compound, silicon-carbon composite, silicon-nitrogen composite, and silicon alloy. The tin-based material may be selected from one or more of elemental tin, tin-oxygen compound, and tin alloy.

In some embodiments, the negative electrode sheet may directly use a sodium metal sheet or a sodium metal alloy sheet.

### [Electrolyte]

The electrolyte serves to conduct ions between the positive electrode sheet and the negative electrode sheet. The type of the electrolyte is not particularly limited in the present application, and can be selected according to needs. For example, the electrolyte may be selected from at least one of solid electrolyte and liquid electrolyte (i.e., electrolyte solution).

In some embodiments, an electrolyte solution is used as the electrolyte. The electrolyte solution comprises an electrolyte salt and a solvent.

The electrolyte solution can comprise an electrolyte salt and a solvent. By way of example, the solvent may be selected from one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS) and diethyl sulfone (ESE). By way of example, the electrolyte salt may be NaClO₄, NaPF₆ or NaFSI (sodium bisfluorosulfonimide), etc.

In some embodiments, the electrolyte solution further optionally comprises an additive. For example, the additive may include a negative electrode film-forming additive, may also include a positive electrode film-forming additive, and may further include an additive capable of improving certain performances of the battery, such as an additive for improving the overcharging performance of the battery, an additive for improving the high temperature performance of the battery, and an additive for improving the low temperature performance of the battery, etc.

### [Separator]

The secondary battery using an electrolyte solution and some secondary batteries using a solid electrolyte further include a separator. A separator is provided between the positive electrode sheet and the negative electrode sheet, and functions to separate. The type of the separator is not particularly limited in the present application, and any well-known separator with a porous structure having good chemical stability and mechanical stability may be selected. In some embodiments, the material of the separator may be selected from one or more of glass fiber, non-woven cloth, polyethylene, polypropylene, and polyvinylidene fluoride. The separator may be a single-layer film or a multi-layer composite film, and is not particularly limited. When the separator is a multi-layer composite film, the material of each layer may be the same or different, and there is no particular limitation.

In some embodiments, the positive electrode sheet, the negative electrode sheet, and the separator can be made into an electrode assembly by a winding process or a lamination process.

In some embodiments, the secondary battery may include an outer package. The outer package can be used to encapsulate the above-mentioned electrode assembly and electrolyte.

In some embodiments, the outer package of the secondary battery may be a hard case, such as a hard plastic case, an aluminium case, a steel case, and the like. The outer package of the secondary battery can also be a soft pack, such as a bag-type soft pack. The material of the soft pack can be a plastic, and examples as plastics include polypropylene (PP), polybutylene terephthalate (PBT) and polybutylene succinate (PBS), etc.

The shape of the secondary battery is not particularly limited in the present application, and may be cylindrical, square or of any other shapes.

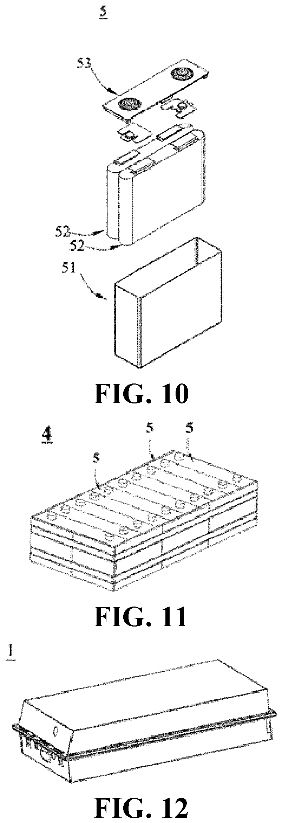

In some embodiments, referring to Fig. 10, the outer package can include a case 51 and a cover plate 53. Here, the case 51 can include a bottom plate and a side plate connected to the bottom plate, with the bottom plate and the side plate enclosing to form an accommodating cavity. The case 51 has an opening that communicates with the accommodating cavity, and the cover plate 53 can cover the opening to close the accommodating cavity. The positive electrode sheet, the negative electrode sheet, and the separator may be formed into an electrode assembly 52 by a winding process or a lamination process. The electrode assembly 52 is encapsulated within the accommodating cavity. The electrolyte solution impregnates the electrode assembly 52. The number of electrode assemblies 52 contained in the secondary battery 5 can be one or more, and can be selected by those skilled in the art according to specific actual needs.

In some embodiments, secondary batteries can be assembled into a battery module, the number of secondary batteries contained in the battery module can be one or more, and the specific number can be selected by those skilled in the art according to the application and capacity of the battery module.

Fig. 11 is an example of battery module 4. Referring to Fig. 11, in the battery module 4, a plurality of secondary batteries 5 can be sequentially arranged along the length direction of the battery module 4. Of course, any other arrangement is also possible. The plurality of secondary batteries 5 may further be fixed by fasteners.

Optionally, the battery module 4 can further include a case having an accommodating space, in which the plurality of secondary batteries 5 are accommodated.

In some embodiments, the above-mentioned battery modules can further be assembled into a battery pack, and the number of battery modules contained in the battery pack can be selected by those skilled in the art according to the application and capacity of the battery pack.

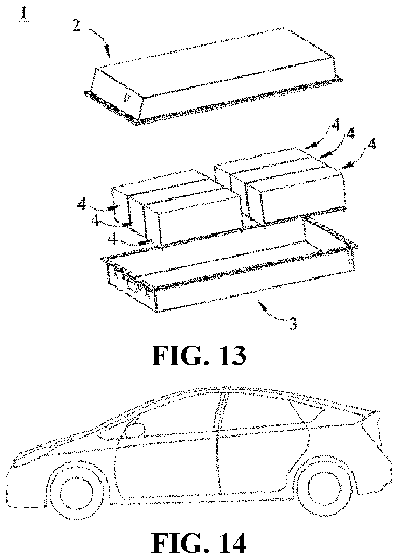

Fig. 12 and Fig. 13 are an example of battery pack 1. Referring to Fig. 12 and Fig. 13, the battery pack 1 can include a battery box and a plurality of battery modules 4 provided in the battery box. The battery box includes an upper box 2 and a lower box 3, wherein the upper box 2 can cover the lower box 3, and forms an enclosed space for accommodating the battery module 4. The plurality of battery modules 4 can be arranged in the battery box according to any manner.

In addition, the present application further provides a powered device, and the powered device includes one or more of the secondary battery, the battery module, or the battery pack provided by the present application. The secondary battery, battery module, or battery pack can be used as a power source for the powered device, and can also be used as an energy storage unit for the powered device. The powered device may be, but is not limited to, a mobile device (such as a mobile phone, a laptop, etc.), an electric vehicle (such as an all-electric vehicle, a hybrid electric vehicle, a plug-in hybrid electric vehicle, an electric bicycle, an electric scooter, an electric golf cart, an electric truck, etc.), an electric train, a ship, a satellite, an energy storage system, etc.

For the powered device, the secondary battery, the battery module, or the battery pack can be selected according to its use requirements.

Fig. 14 is an example of powered device. The powered device is an all-electric vehicle, a hybrid electric vehicle, or a plug-in hybrid electric vehicle, etc. In order to meet the requirements of the powered device for high power and high energy density of secondary batteries, a battery pack or a battery module may be used.

By way of another example, the powered device may be a mobile phone, a tablet computer, a laptop, etc. The powered device is generally required to be light and thin, and can use a secondary battery as a power source.

### Examples

Hereinafter, examples of the present application are illustrated. The examples described below are illustrative, are merely used to explain the present application, and should not be construed as a limitation to the present application. Where specific techniques or conditions are not specified in the examples, the techniques or conditions described in the literature's of the art or the product specifications are followed. Where manufacturers are not specified, the reagents or instruments used are conventional products and are commercially available. The beneficial effects of the present application are further illustrated below in conjunction with the examples.

### Performance test method

### 1. Water absorbency test

### (1) Test method 1

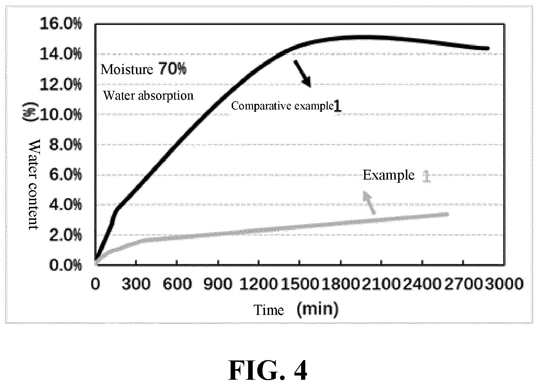

1 g of the PBA material prepared in each Example and Comparative example was placed in a humid air atmosphere with a relative humidity of 70%, weighed after storage of 15min, 30min, 60min, 180min, respectively, and weighed every three hours after 180min. Assuming that the mass weighed was m, then the water absorption = (m-1) /1*100%. The calculated water absorption was plotted against time, and Fig. 4 showed the curves of water absorption over time for each of the PBA materials having a core-shell structure prepared in Example 1 and Comparative example 1.

### (2) Test method 2

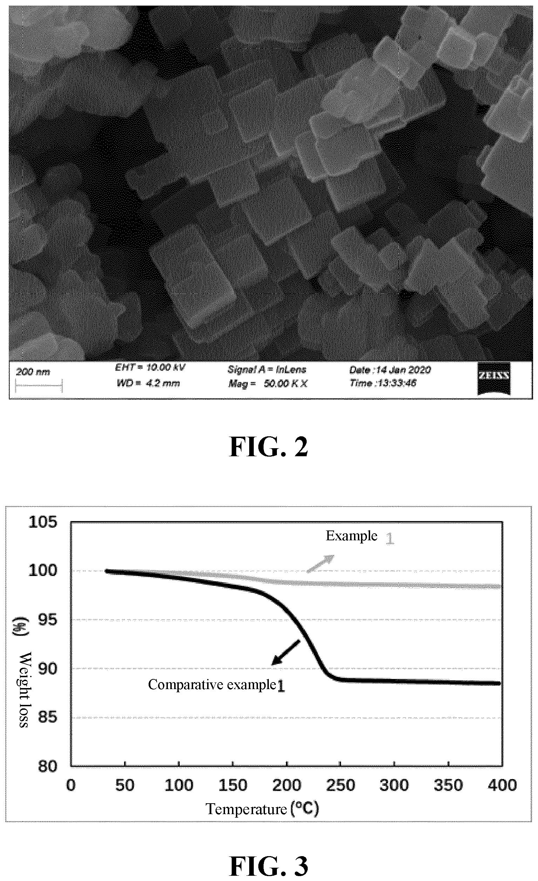

1 g of the PBA material prepared in each Example and Comparative example was placed in a humid air atmosphere with a relative humidity of 70%, respectively, and after storage of 48h, the stored sample was subjected to thermogravimetric analysis test in an N₂ atmosphere with a purity of 99.99%, the heating rate was 10°C/min, and the temperature range was 0-300°C, thus the water content in the material was quantitatively determined. The quantitative determination of the water content in the material was carried out as follows: the initial weight and the weight at 300°C were extracted by thermogravimetric analysis test, and the water content was obtained by dividing the difference by the initial weight. The water content test results for the PBA material of each Example and Comparative example were listed in Tables 1-10 below. Also, the water contents of the PBA materials prepared in Example 1 and Comparative example 1 as a function of temperature in thermogravimetric analysis test were shown in Fig.3.

### 2. Battery performance test

### (1) Preparation of positive electrode sheet and negative electrode sheet

The positive electrode sheet was prepared by the following method: the PBA material (positive electrode active material) prepared in each Example and Comparative example, a conductive agent Ketjen black (KB) and a binder polyvinylidene fluoride (PVDF) were added to N-methyl pyrrolidone (NMP), and stirred by a rotor for 1-3 h to make a slurry. The slurry was coated on a current collector Al foil, with the coating thickness being 200-300 µm. It was dried in a vacuum drying oven at 90-110°C for 10-15 h, and then naturally cooled down to room temperature to obtain the positive electrode sheet. The mass ratio of the materials used was the positive electrode active material : the conductive agent Ketjen Black : the binder polyvinylidene fluoride = 7: 2: 1, and 28 g of active material was added for every 20-40 g of NMP.

The negative electrode sheet was prepared by the following method: Type I/II/III commercial hard carbon negative electrode material (negative electrode active material) purchased from KURARAY of Japan, a conductive agent carbon black (CB), and a binder polyvinylidene fluoride (PVDF) were added to N-methyl pyrrolidone (NMP), and stirred by a rotor for 1-3 h to make a slurry. The slurry was coated on a current collector Al foil, the coating amount is determined according to the absolute capacity of the positive electrode, and the absolute capacity of the negative electrode : the absolute capacity of the positive electrode = 1.16, wherein the absolute capacity (mAh) = reversible specific capacity of the first discharge (mAh/g) * the total weight of the active material (g), and the reversible specific capacity was measured as described below. It was dried in a vacuum drying oven at 90-110°C for 10-15 h, and then naturally cooled down to room temperature to obtain the positive electrode sheet. The mass ratio of the materials used was the negative electrode active material : the conductive agent carbon black CB: the binder polyvinylidene fluoride = 9 : 0.4 : 0.6, and 28 g of active material was added for every 20-40 g of NMP.

### (2) Preparation of sodium-ion secondary battery

A sodium-ion button-type half battery was prepared by the following method: the positive electrode sheet prepared by the above method was cut into electrode sheets with a diameter of 14-16 mm using a sheet cutter, a glass fiber separator was used, sodium metal was used as the negative electrode, an electrolyte solution was added, and a CR 2032 button-type battery was assembled in a glove box filled with an argon atmosphere. The electrolyte solution is a solution containing NaClO₄ and FEC (fluoroethylene carbonate), wherein the solvent is a mixture of ethylene carbonate (EC) and diethyl carbonate (DEC) with a volume ratio of 1:1, the concentration of NaClO₄ is 1M, and the mass of FEC is 2% of the mass of the solution.

A sodium-ion button-type full battery was prepared by the following method: the positive electrode sheet and the negative electrode sheet prepared by the above method (1) were cut into electrode sheets with diameters of 14 mm and 16 mm, respectively, using a sheet cutter, a glass fiber separator was used, an electrolyte solution was added, and a CR 2032 button-type battery was assembled in a glove box filled with an argon atmosphere. The electrolyte solution is a solution containing NaClO₄ and FEC (fluoroethylene carbonate), wherein the solvent is a mixture of ethylene carbonate (EC) and diethyl carbonate (DEC) with a volume ratio of 1:1, the concentration of NaClO₄ is 1M, and the mass of FEC is 2% of the mass of the solution.

### (3) Battery performance test

### [Reversible specific capacity]

In the interval of 2.5-4.0V and at room temperature of 25°C, the sodium-ion button-type full battery was charged and discharged at a current density of 20mA/g, the capacity of the battery during charge-discharge was recorded, and the reversible specific capacity was obtained by dividing the capacity by the mass of the positive electrode active material. The test results of the first discharge reversible specific capacity of the secondary battery prepared with the PBA material of each Example and Comparative example were listed in Tables 1-10 below.

### [Long-term cycling performance]

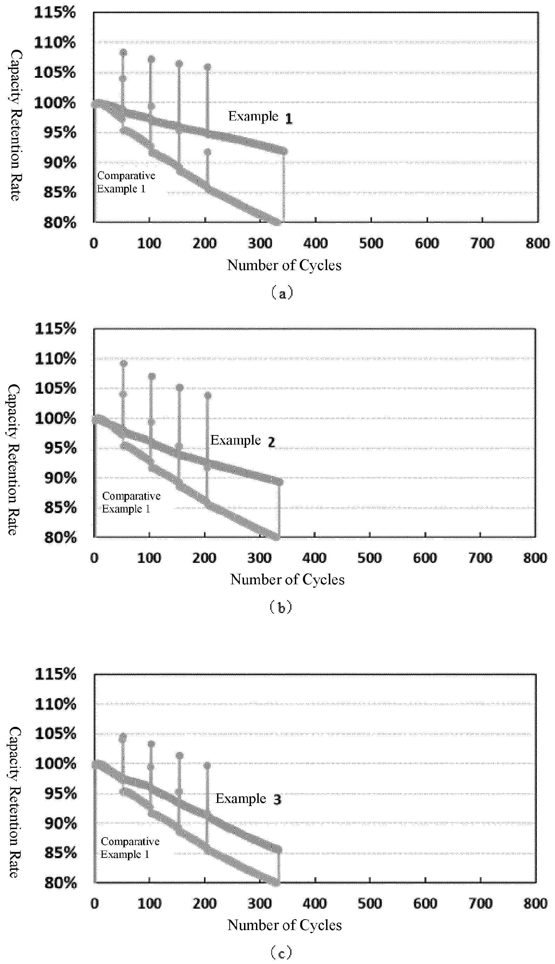

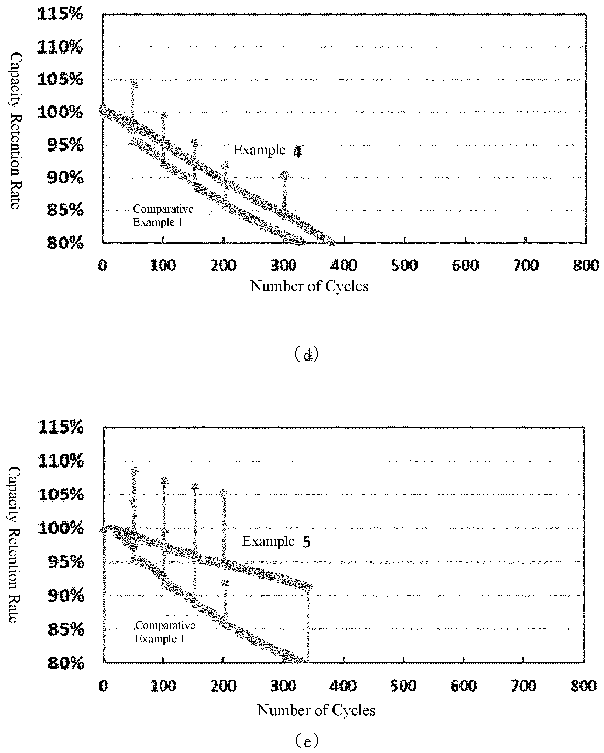

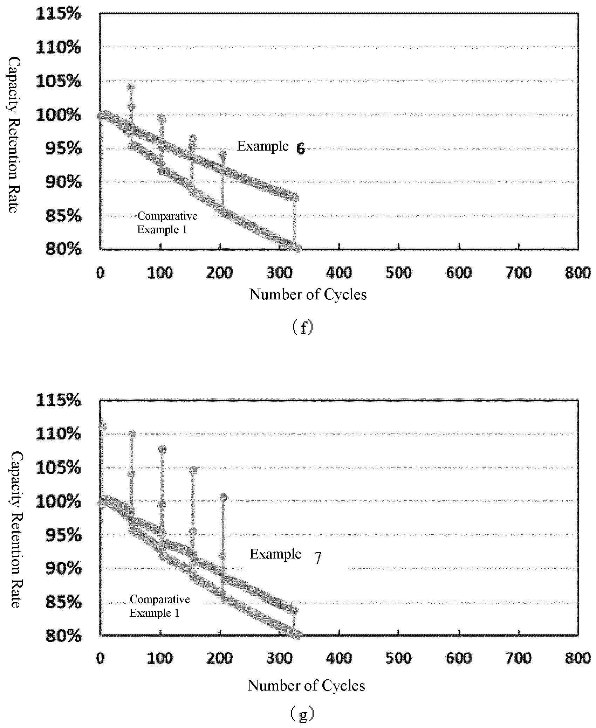

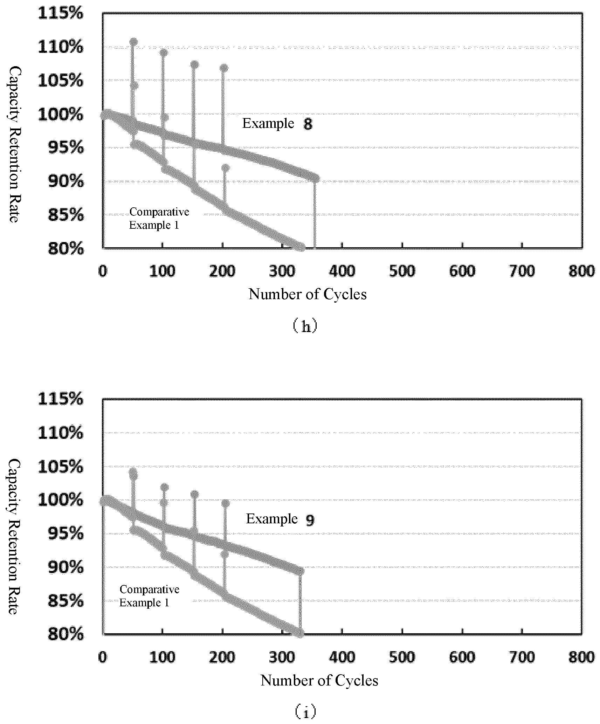

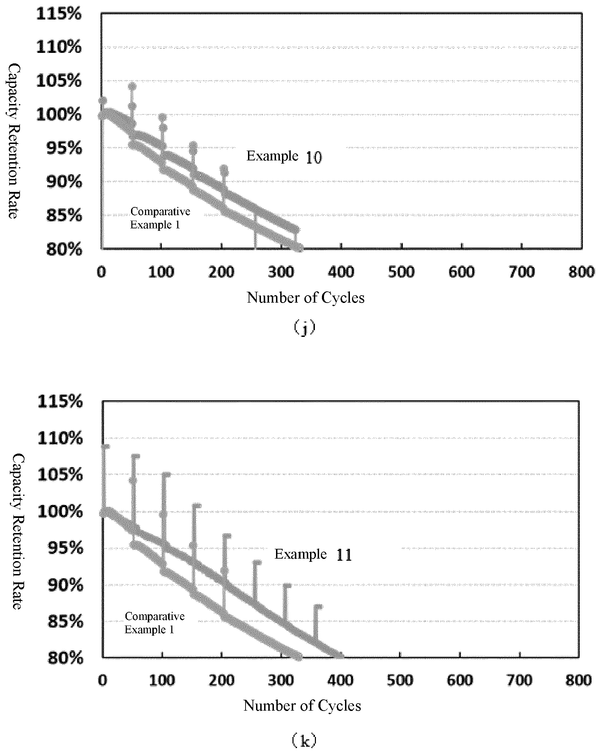

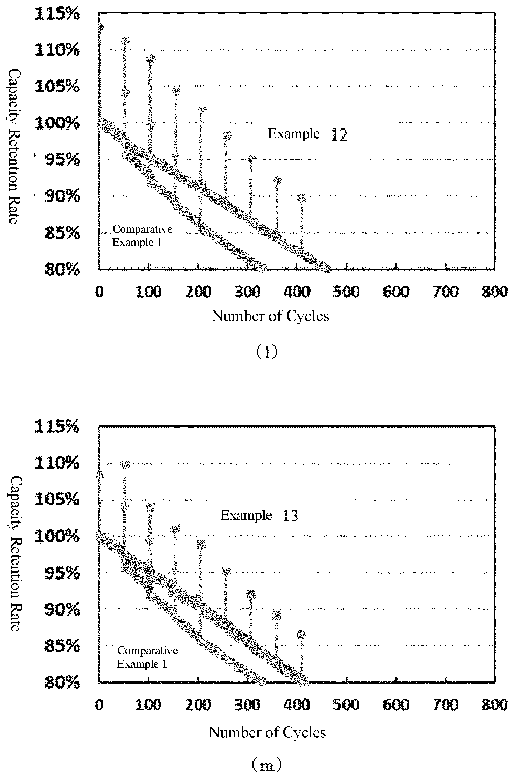

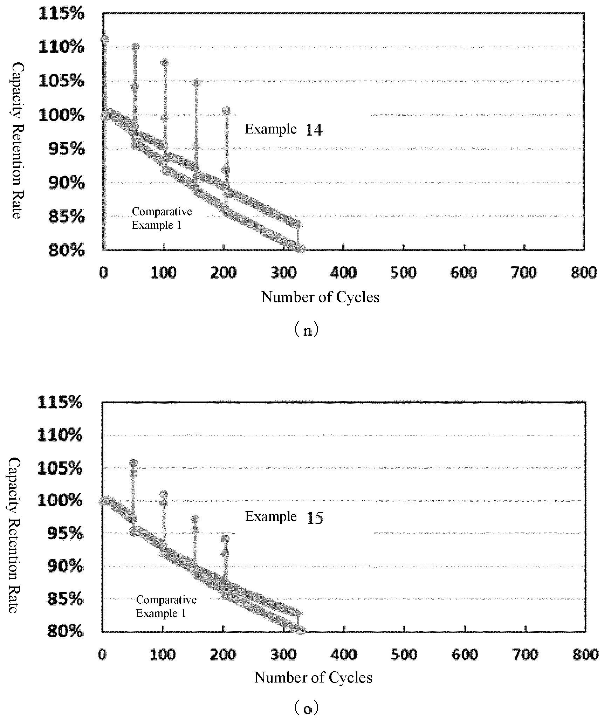

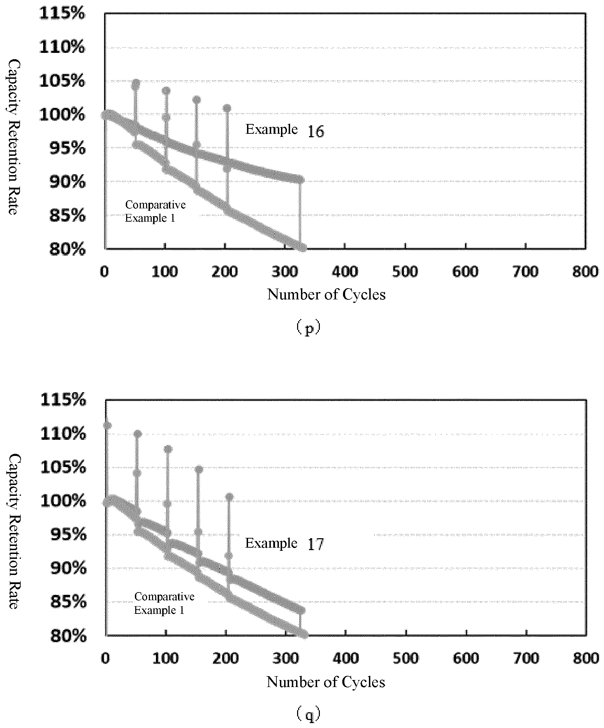

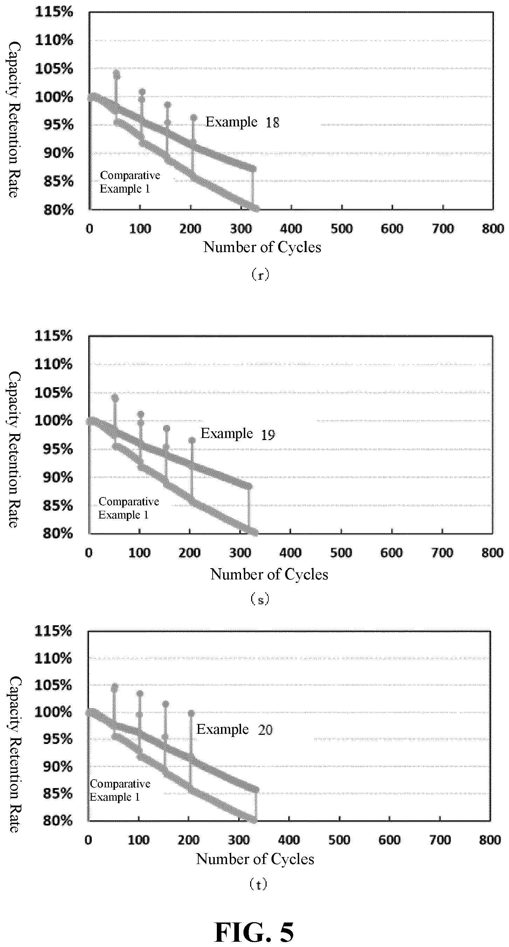

The prepared sodium-ion button-type half battery was charged and discharged at a current density of 150mA/g at 45°C, and the capacity value of each charge-discharge of the battery was recorded. Taking the capacity value of the first charge-discharge as 100%, the percentage of the capacity value of each subsequent charge-discharge in the initial capacity value was calculated. This percentage was plotted against the number of cycles, and was shown in Fig. 5.

### [Short-term charging rate]

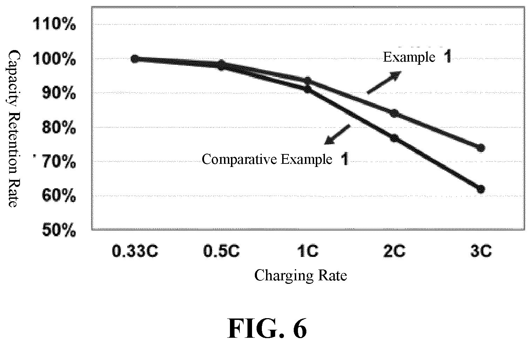

The prepared sodium-ion button-type full battery was charged at different current densities, and discharged at a rate of 0.33C, and the capacity value of each discharge was recorded to calculate the capacity retention rate. The current density and capacity retention rate were plotted to obtain a rate curve of the battery. The rate curves of the batteries prepared with the PBA materials of Example 1 and Comparative example 1 were shown in Fig. 6.

### 3. Cladding layer thickness measurement

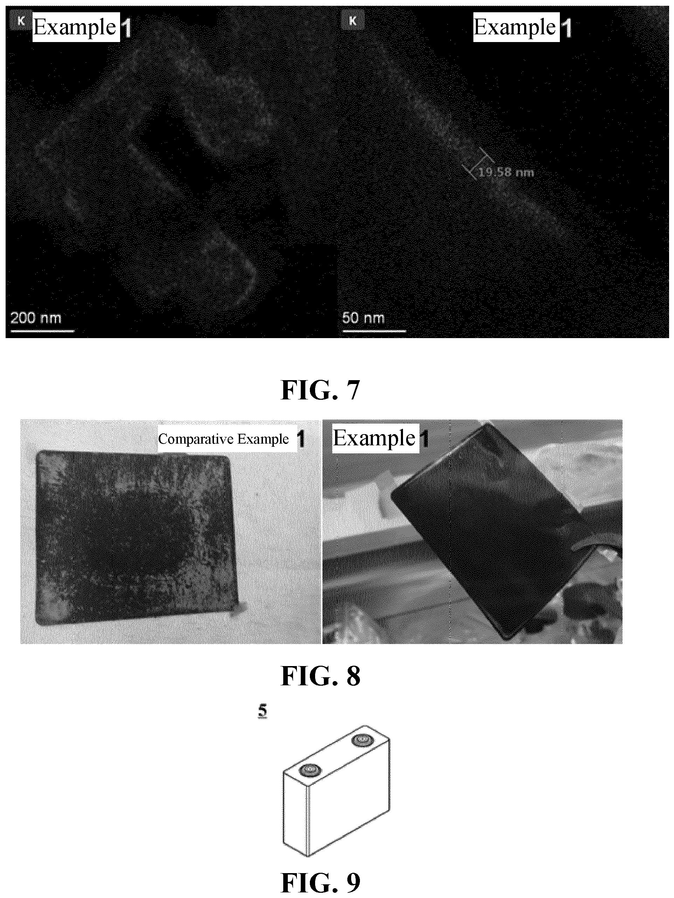

A sample of PBA material was subjected to ion beam shearing using a focused ion beam (FIB) to expose a cross-section of the material, and then the sample with exposed cross-section was vacuum transferred into a transmission electron microscope (TEM) testing apparatus; elemental analysis was performed on the cross-section by using an energy spectrometer to determine the location and uniformity of K element distribution. Fig. 7 showed a TEM photograph obtained by the above method for the PBA material of Example 1. The cladding layer thicknesses of the PBA materials of Examples 1-7 as measured by the above method were given in Tables 1-2.

### Example 1:

19.3624g of sodium ferrocyanide decahydrate, 35.292g of sodium citrate monohydrate and 7.9164g of manganese chloride tetrahydrate were weighed. The above sodium ferrocyanide decahydrate was added to 100ml of deionized water, and stirred for 30min to form a solution b. Manganese chloride tetrahydrate and sodium citrate monohydrate were added to 100ml of deionized water, stirred for 30min to form a solution a; after uniformly stirring, it was added dropwise to the above solution b with a rate of dropwise addition of 1ml/min; and after the completion of dropwise addition, it was stirred for 24h with a stirring rate of 400 rpm at a temperature of 80°C to form a suspension.

The solid material in the above suspension was filtered with a Buchner funnel, and washed 3 times with deionized water until no sodium salt and transition metal ions remained in the product. The obtained material was vacuum-dried at 120°C for 24h with a relative vacuum degree <-0.1Mpa to obtain 10g of prussian blue analog particle Na₂MnFe(CN)₆.

The obtained prussian blue analog particle was added to 100ml of deionized water and ultrasonically dispersed for 10min to form a suspension. 0.9681g of sodium ferrocyanide decahydrate, 0.745g of potassium chloride and 0.3958g of manganese chloride tetrahydrate were weighed. The above-mentioned sodium ferrocyanide decahydrate and potassium chloride were added to 10ml of deionized water, stirred for 30min to form a solution d; and manganese chloride tetrahydrate was added to 10ml of deionized water, and stirred for 30min to form a solution c. After uniformly stirring, c and d were added dropwise to the above suspension at a rate of dropwise addition of 0.2ml/min, and after the completion of dropwise addition, stirring was continued to age for 12h. The stirring rate was 400 rpm, and the temperature was 80°C.

The solid material in the suspension was filtered with a Buchner funnel, and washed 3 times with deionized water until no sodium salt and potassium salt as well as transition metal ions remained in the product. The obtained material was vacuum-dried at 120°C for 24h with a relative vacuum degree <-0.1Mpa to obtain a prussian blue analog having a core-shell structure. The outer shell was K₂MnFe(CN)₆, and the core was Na₂MnFe(CN)₆. The prussian blue analog had a particle size of 500-1000nm, and had a small cubic morphology with sharp edges and corners, and the micro-morphology SEM and the element distribution EDS were as shown in Fig. 2.

### Example 2:

A prussian blue analog having a core-shell structure was prepared in the same manner as in Example 1, except that 1.21g of rubidium chloride was used instead of 0.745g of potassium chloride in the preparation of the solution d. A prussian blue analog having a core-shell structure was obtained. The outer shell was Rb₂MnFe(CN)₆, and the core was Na₂MnFe(CN)₆.

### Example 3:

A prussian blue analog having a core-shell structure was prepared in the same manner as in Example 1, except that 1.68g of cesium chloride was used instead of 0.745g of potassium chloride in the preparation of the solution d. A prussian blue analog having a core-shell structure was obtained. The outer shell was Cs₂MnFe(CN)₆, and the core was Na₂MnFe(CN)₆.

### Example 4:

A prussian blue analog having a core-shell structure was prepared in the same manner as in Example 1, except that 0.43g of lithium chloride was used instead of 0.745g of potassium chloride in the preparation of the solution d. A prussian blue analog having a core-shell structure was obtained. The outer shell was Li₂MnFe(CN)₆, and the core was Na₂MnFe(CN)₆.

**Table 1**

| | Elem ent A of cla dding layer | Cladd ing a moun t | Slow-releasin g agent in solu tion a | Molar rat io of P to slow-rel easing ag ent in sol ution a | Solvent system | Water content o f material after 4 8h of water abso rption in humid air (0-300°C TGA) | Reversible specific ca pacity of fi rst dischar ge (mAh/g) | Cladd ing la yer thi cknes s (nm) |
|---|---|---|---|---|---|---|---|---|
| Exampl e 1 | K | 5% | Sodium citrate monohydrate | 1:3.2 | Deioniz ed wate r | 2.6% | 150.9 | 19 |
| Exampl e 2 | Rb | 5% | Sodium citrate monohydrate | 1:3.2 | Deioniz ed wate r | 2.1% | 148.9 | 14 |
| Exampl e 3 | Cs | 5% | Sodium citrate monohydrate | 1:3.2 | Deioniz ed wate r | 1.6% | 146.5 | 10 |
| Exampl e 4 | Li | 5% | Sodium citrate monohydrate | 1:3.2 | Deioniz ed wate r | 4.5% | 151.4 | 30 |

### Example 5:

A prussian blue analogue with core-shell structure was prepared in the same manner as in Example 1, except that 1.9362g of sodium ferrocyanide decahydrate, 1.49g of potassium chloride and 20ml of deionized water were used to prepare the solution d, and 0.7916g of manganese chloride tetrahydrate and 20ml of deionized water were used to prepare the solution c. A prussian blue analog having a core-shell structure was obtained. The outer shell was K₂MnFe(CN)₆, and the core was Na₂MnFe(CN)₆.

### Example 6:

A prussian blue analogue with core-shell structure was prepared in the same manner as in Example 1, except that 0.3973g of sodium ferrocyanide decahydrate, 0.30g of potassium chloride and 4ml of deionized water were used to prepare the solution d, and 0.1583g of manganese chloride tetrahydrate and 4ml of deionized water were used to prepare the solution c. A prussian blue analog having a core-shell structure was obtained. The outer shell was K₂MnFe(CN)₆, and the core was Na₂MnFe(CN)₆.

### Example 7:

A prussian blue analogue with core-shell structure was prepared in the same manner as in Example 1, except that 0.19362g of sodium ferrocyanide decahydrate, 0.15g of potassium chloride and 1ml of deionized water were used to prepare the solution d, and 0.07916g of manganese chloride tetrahydrate and 1ml of deionized water were used to prepare the solution c. A prussian blue analog having a core-shell structure was obtained. The outer shell was K₂MnFe(CN)₆, and the core was Na₂MnFe(CN)₆.

**Table 2**

| | Elemen t A of c ladding layer | Cladd ing a moun t | Slow-releasi ng agent in s olution a | Molar rat io of P to slow-rel easing ag ent in sol ution a | Solvent s ystem | Water content o f material after 4 8h of water abso rption in humid air (0-300°C TGA) | Reversibl e specific capacity of first di scharge (mAh/g) | Cladd ing la yer th ickne ss (n m) |
|---|---|---|---|---|---|---|---|---|
| Exam ple 1 | K | 5% | Sodium citra te monohydr ate | 1:3.2 | Deionize d water | 2.6% | 150.9 | 19 |
| Exam ple 5 | K | 10% | Sodium citra te monohydr ate | 1:3.2 | Deionize d water | 2% | 143.1 | 40 |
| Exam ple 6 | K | 2% | Sodium citra te monohydr ate | 1:3.2 | Deionize d water | 3.9% | 153.6 | 5 |
| Exam ple 7 | K | 1% | Sodium citra te monohydr ate | 1:3.2 | Deionize d water | 4.5% | 154.8 | 3 |

### Example 8:

10g finished product of prussian blue analog particle Na₂MnFe(CN)₆ prepared according to the method in the literature Journal of The Electrochemical Society, 163 (9) A2117-A2123 (2016) was added to 100ml of deionized water, and ultrasonically dispersed for 10min to form a suspension. 1.9362g of sodium ferrocyanide decahydrate, 1.49g of potassium chloride and 0.7916g of manganese chloride tetrahydrate were weighed, and the above-mentioned sodium ferrocyanide decahydrate and potassium chloride were added to 20ml of deionized water, stirred for 30min to form a solution d, and the above-mentioned manganese chloride tetrahydrate were added to 20ml of deionized water, and stirred for 30min to form a solution c. After uniformly stirring, c and d were added dropwise to the above suspension at a rate of dropwise addition of 0.2ml/min, and after the completion of dropwise addition, stirring was continued to age for 12h, the stirring rate was 400 rpm, and the temperature was 80°C.

The solid material in the suspension was filtered with a Buchner funnel, and washed 3 times with deionized water until no sodium salt and potassium salt as well as transition metal ions remained in the product. The obtained material was vacuum-dried at 120°C for 24h with a relative vacuum degree <-0.1Mpa to obtain a prussian blue analog having a core-shell structure. The outer shell was K₂MnFe(CN)₆, and the core was Na₂MnFe(CN)₆.

**Table 3**

| | Element A of cladding layer | Cladding amount | Solvent system | Water content of material after 48h of water absorption in humid air (0-300°C TGA) | Reversible specific capacity of first discharge (mAh/g) |
|---|---|---|---|---|---|
| Example 5 | K | 10% | Deionized water | 2% | 143.1 |
| Example 8 | K | 10% | Deionized water | 2.2% | 147.3 |

### Example 9:

A prussian blue analog having a core-shell structure was prepared in the same manner as in Example 5, except that respectively, 100ml of a mixed liquid of deionized water and ethanol (the volume ratio of deionized water to ethanol was 7 : 3) was used instead of 100ml of deionized water to prepare the suspension of the solution b, the solution a and the prussian blue analog particle, 20ml of a mixed liquid of deionized water and ethanol (the volume ratio of deionized water to ethanol was 7 : 3) was used instead of 20ml of deionized water to prepare the solution d, and 20ml of ethanol was used instead of 20ml of deionized water to prepare the solution c. A prussian blue analog having a core-shell structure was obtained. The outer shell was K₂MnFe(CN)₆, and the core was Na₂MnFe(CN)₆.

**Table 4**

| | Element A of cladding layer | Cladding amount | Slow-releasing agent in solution a | Molar ratio of P to slow-releasing agent in solution a | Solvent system | Water content of material after 48h of water absorption in humid air (0-300°C TGA) | Reversible specific capacity of first discharge (mAh/g) |
|---|---|---|---|---|---|---|---|
| Examp le 5 | K | 10% | Sodium citrate monohydrate | 1:3.2 | Deionized water | 2% | 143.1 |
| Examp le 6 | K | 2% | Sodium citrate monohydrate | 1:3.2 | Deionized water | 3.9% | 153.6 |
| Examp le 9 | K | 10% | Sodium citrate monohydrate | 1:3.2 | Mixture of deionized water and ethanol/eth anol | 1.5% | 151.5 |

### Example 10:

A prussian blue analogue with core-shell structure was prepared in the same manner as in Example 1, except that 3.529g of sodium citrate monohydrate was further added in the preparation of the solution c. A prussian blue analog having a core-shell structure was obtained. The outer shell was K₂MnFe(CN)₆, and the core was Na₂MnFe(CN)₆. The prussian blue analog had a particle size of 500-1000nm, and had a small cubic morphology with sharp edges and corners.

**Table 5**

| | Elemen t A of c ladding layer | Cladd ing a moun t | Slow-relea sing agent in solution c | Slow-relea sing agent in solution a | Molar ratio of P to slo w-releasin g agent in s olution a | Solve nt sys tem | Water content o f material after 4 8h of water abso rption in humid air (0-300°C TGA) | Reversibl e specific capacity of first di scharge (mAh/g) |
|---|---|---|---|---|---|---|---|---|
| Exam ple 1 | K | 5% | - | Sodium cit rate monoh ydrate | 1:3.2 | Deion ized water | 2.6% | 150.9 |
| Exam ple 1 0 | K | 5% | Sodium cit rate monoh ydrate | Sodium cit rate monoh ydrate | 1:3.2 | Deion ized water | 2.2% | 151.2 |

### Example 11:

A prussian blue analog having a core-shell structure was prepared in the same manner as in Example 1, except that 7.125g of manganese chloride tetrahydrate was used instead of 7.9164g of manganese chloride tetrahydrate to prepare the solution a, the prussian blue analog having a core-shell structure was obtained. The outer shell was K₂MnFe(CN)₆, and the core was Na₂MnFe(CN)₆. The prussian blue analog had a particle size of 500-1000nm, and had a small cubic morphology with sharp edges and corners.

### Example 12:

A prussian blue analogue with core-shell structure was prepared in the same manner as in Example 1, except that 70.584g of sodium citrate monohydrate was used instead of 35.292g of sodium citrate monohydrate to prepare the solution a. A prussian blue analog having a core-shell structure was obtained. The outer shell was K₂MnFe(CN)₆, and the core was Na₂MnFe(CN)₆. The prussian blue analog had a particle size of 500-1000nm, and had a small cubic morphology with sharp edges and corners.

### Example 13:

A prussian blue analogue with core-shell structure was prepared in the same manner as in Example 1, except that 42.161g of tetrasodium ethylenediamine tetraacetate was used instead of 35.292g of sodium citrate monohydrate, and 7.125g of manganese chloride tetrahydrate was used instead of 7.9164g of manganese chloride tetrahydrate to prepare the solution a. A prussian blue analog having a core-shell structure was obtained. The outer shell was K₂MnFe(CN)₆, and the core was Na₂MnFe(CN)₆. The prussian blue analog had a particle size of 500-1000nm, and had a small cubic morphology with sharp edges and corners.

**Table 6**

| | Elemen t A of c ladding layer | Cladd ing a moun t | Slow-relea sing agent in solution a | Molar ratio of P to slo w-releasin g agent in s olution a | Solvent system | Water content of m aterial after 48h of water absorption in humid air (0-300°C TGA) | Reversible s pecific capa city of first discharge (mAh/g) |
|---|---|---|---|---|---|---|---|
| Example 1 | K | 5% | Sodium cit rate monoh ydrate | 1:3.2 | Deioniz ed wate r | 2.6% | 150.9 |
| Example 1 1 | K | 5% | Sodium cit rate monoh ydrate | 1:3.6 | Deioniz ed wate r | 4.2% | 144.5 |
| Example 1 2 | K | 5% | Sodium cit rate monoh ydrate | 1:6.4 | Deioniz ed wate r | 4.8% | 145.6 |
| Example 1 3 | K | 5% | Tetrasodiu m ethylene diamine tet raacetate | 1:3.1 | Deioniz ed wate r | 5.3% | 147.3 |

### Example 14:

A prussian blue analog having a core-shell structure was prepared in the same manner as in Example 11, except that 35g of sodium chloride was further added in the preparation of the solution b. A prussian blue analog having a core-shell structure was obtained. The outer shell was K₂MnFe(CN)₆, and the core was Na₂MnFe(CN)₆. The prussian blue analog had a particle size of 500-1000nm, and had a morphology of sphere.

### Example 15:

A prussian blue analog having a core-shell structure was prepared in the same manner as in Example 11, except that 35g of sodium chloride was further added in the preparation of the solution b, and the rate of dropwise addition of the solution a was 10ml/min. A prussian blue analog having a core-shell structure was obtained. The outer shell was K₂MnFe(CN)₆, and the core was Na₂MnFe(CN)₆. The prussian blue analog had a particle size of 500-1000nm, and had a small cubic morphology with sharp edges and corners.

**Table 7**

| | Elem ent A of cla dding layer | Cladd ing a moun t | Slow-rel easing ag ent in sol ution a | Molar r atio of P to slo w-relea sing ag ent in s olution a | Soluble sodiu m salt i n soluti on b | Rate of dropw ise add ition of solutio n a (ml /min) | Solvent system | Water conte nt of materi al after 48h of water abs orption in h umid air (0-300°C T GA) | Reversi ble spec ific capa city of f irst disc harge (mAh/g ) |
|---|---|---|---|---|---|---|---|---|---|
| Example 11 | K | 5% | Sodium c itrate mo nohydrat e | 1:3.6 | - | 1 | Deioni zed wa ter | 4.2% | 144.5 |
| Example 14 | K | 5% | Sodium c itrate mo nohydrat e | 1:3.6 | Sodium chlorid e | 1 | Deioni zed wa ter | 3.8% | 143.7 |
| Example 15 | K | 5% | Sodium c itrate mo nohydrat e | 1:3.6 | Sodium chlorid e | 10 | Deioni zed wa ter | 4.7% | 145.6 |

### Example 16:

A prussian blue analog having a core-shell structure was prepared in the same manner as in Example 1, except that the temperature at which stirring was continued to age after the completion of the dropwise addition of the solutions c and d was 40°C. A prussian blue analog having a core-shell structure was obtained. The outer shell was K₂MnFe(CN)₆, and the core was Na₂MnFe(CN)₆. The prussian blue analog had a particle size of 500-1000nm, and had a small cubic morphology with sharp edges and corners.

### Example 17:

A prussian blue analog having a core-shell structure was prepared in the same manner as in Example 1, except that the temperature at which stirring was continued to age after the completion of the dropwise addition of the solutions c and d was 110°C. A prussian blue analog having a core-shell structure was obtained. The outer shell was K₂MnFe(CN)₆, and the core was Na₂MnFe(CN)₆. The prussian blue analog had a particle size of 500-1000nm, and had a small cubic morphology with sharp edges and corners.

**Table 8**

| | Element A of cladding layer | Cladd ing a moun t | Slow-relea sing agent in solution a | Molar ratio of P to slo w-releasin g agent in s olution a | Solve nt sys tem | Temp eratur e of st ep 4 | Water content of material af ter 48h of wat er absorption in humid air (0-300°C TG A) | Reversibl e specific capacity of first di scharge (mAh/g) |
|---|---|---|---|---|---|---|---|---|
| Example 1 | K | 5% | Sodium cit rate monoh ydrate | 1:3.2 | Deion ized water | 80°C | 2.6% | 150.9 |
| Example 16 | K | 5% | Sodium cit rate monoh ydrate | 1:3.2 | Deion ized water | 40°C | 2.9% | 143.9 |
| Example 17 | K | 5% | Sodium cit rate monoh ydrate | 1:3.2 | Deion ized water | 110°C | 5.1% | 148.9 |

### Example 18:

A prussian blue analog having a core-shell structure was prepared in the same manner as in Example 1, except that the rates of dropwise addition of the solutions c and d were each 2ml/min. A prussian blue analog having a core-shell structure was obtained. The outer shell was K₂MnFe(CN)₆, and the core was Na₂MnFe(CN)₆. The prussian blue analog had a particle size of 500-1000nm, and had a small cubic morphology with sharp edges and corners.

### Example 19:

A prussian blue analog having a core-shell structure was prepared in the same manner as in Example 1, except that the rates of dropwise addition of the solutions c and d were each 5ml/min. A prussian blue analog having a core-shell structure was obtained. The outer shell was K₂MnFe(CN)₆, and the core was Na₂MnFe(CN)₆. The prussian blue analog had a particle size of 500-1000nm, and had a small cubic morphology with sharp edges and corners.

### Example 20:

A prussian blue analog having a core-shell structure was prepared in the same manner as in Example 1, except that the rates of dropwise addition of the solutions c and d were each 8ml/min. A prussian blue analog having a core-shell structure was obtained. The outer shell was K₂MnFe(CN)₆, and the core was Na₂MnFe(CN)₆. The prussian blue analog had a particle size of 500-1000nm, and had a small cubic morphology with sharp edges and corners.

**Table 9**

| | Elemen t A of c ladding layer | Cladd ing a moun t | Slow-relea sing agent in solution a | Molar rat io of P to slow-rel easing ag ent in sol ution a | Solvent sys tem | Rates of dropwise addition of solutio ns c and d (ml/mi n) | Water conte nt of materia 1 after 48h of water absor ption in hum id air (0-300°C TG A) | Reversibl e specific capacity of first di scharge (mAh/g) |
|---|---|---|---|---|---|---|---|---|
| Exampl e 1 | K | 5% | Sodium cit rate monoh ydrate | 1:3.2 | Deionized water | 0.2 | 2.6% | 150.9 |
| Exampl e 18 | K | 5% | Sodium cit rate monoh ydrate | 1:3.2 | Deionized water | 2 | 3.3% | 146.9 |
| Exampl e 19 | K | 5% | Sodium cit rate monoh ydrate | 1:3.2 | Deionized water | 5 | 3.5% | 144.6 |
| Exampl e 20 | K | 5% | Sodium cit rate monoh ydrate | 1:3.2 | Deionized water | 8 | 3.9% | 145.8 |

### Comparative example 1:

A prussian blue analog particle was prepared in the same manner as in Example 1 using 19.3624g of sodium ferrocyanide decahydrate, 35.292g of sodium citrate monohydrate and 7.9164g of manganese chloride tetrahydrate, except that the step of cladding the shell layer with solutions c and d was not carried out. 10g of prussian blue analog particle Na₂MnFe(CN)₆ was obtained, having a particle size of 500-1000nm and a small cubic morphology with sharp edges and corners.

### Comparative example 2:

19.3624g of sodium ferrocyanide decahydrate, 35.292g of sodium citrate monohydrate and 7.9164g of manganese chloride tetrahydrate were used, the preparation method was the same as in Example 1, and 10g of prussian blue analog particle Na₂MnFe(CN)₆ without cladding shell layer was obtained, having a particle size of 500-1000nm and a small cubic morphology with sharp edges and corners.

0.5mol of dopamine hydrochloride was placed in a beaker, 4L of deionized water and 210ml of concentrated hydrochloric acid were added to dissolve, and a 5L volumetric flask was used to bring the solution to the precise volume to obtain a dopamine solution with a molar concentration of 0.1mol/L. 10g of prepared Na₂MnFe(CN)₆ sample was taken and placed in a vessel, 100ml of deionized water was added, and ultrasonically dispersed to obtain a suspension. 20ml of the dopamine solution and 0.25g of sodium alginate were taken and placed in a vessel, 100ml of deionized water was added to dissolve; it was uniformly mixed with the Na₂MnFe(CN)₆ suspension, and allowed to stand for 24h at room temperature. Then by washing with water three times, washing with alcohol three times, and after drying treatment, a polydopamine cladded Na₂MnFe(CN)₆ material was obtained.

**Table 10**

| | Element A of cladding layer | Cladding amount | Water content of material after 48h of water absorption in humid air (0-300°C TGA) | Reversible specific capacity of first discharge (mAh/g) |
|---|---|---|---|---|
| Example 1 | K | 5% | 2.6% | 150.9 |
| Comparative example 1 | None | None | 14% | 157.7 |
| Comparative example 2 | Poly dopamine | 5% | 12% | 155.3 |

As can be seen from Table 1 to Table 10, the water absorption rates of the PBA materials having a core-shell structure of Examples 1-20 were significantly lower than those of Comparative examples 1 and 2. Also, the reversible specific capacities of the materials of Examples 1-20 were close to those of Comparative examples 1 and 2. For example, the reversible specific capacities for the first charge/discharge of the secondary battery prepared with the PBA material of Example 1 were 155.2mAh/g and 150.9mAh/g. That is, the effect of the cladding shell on the reversible specific capacity of the material is within an acceptable range.

Meanwhile, characterization of the long-term cycling and short-term charge rate performances of the PBA materials of each Example and Comparative example revealed that the cladded material of each Example exhibited significantly superior performance in terms of rate and cycling performances, especially in terms of high temperature cycling at 45°C. The secondary battery prepared with the PBA material of Example 1 could maintain a capacity retention rate of 85% or more after 500 cycles at a current density of 150mA/g. It can be seen from Fig. 5 that the long-term cycling performances of the PBA materials of Examples 1-20 were all superior to that of Comparative example 1. It can be seen from Fig. 6 that the short-term charging rate of the PBA material of Example 1 was also superior to that of Comparative example 1.

It can be seen from Fig. 7 that in the PBA material prepared in Example 1, K atoms were uniformly distributed on the core surface of the PBA particle, and the thickness of the cladding layer was between 15-20nm, about 19nm.

Additionally, Fig. 8 showed photographs of positive electrode sheets prepared with the PBA materials of Comparative example 1 and Example 1 after 400 charging-discharging cycles, and it can be seen that the PBA material of Comparative example 1 showed white spots due to sodium deposition, which could lead to the deterioration of the electrochemical performance of the PBA material. In contrast, the PBA material of Example 1 showed no white spots.

While the present application has been described with reference to examples, various improvements can be made, and equivalents can be substituted for elements therein without departing from the scope of the present application. In particular, the technical features mentioned in the various examples can be combined in any manner as long as there is no structural conflict. The present application is not limited to the specific examples disclosed herein, and includes all technical solutions falling within the scope of the claims.

## Claims

1. A prussian blue analog having a core-shell structure, **characterized by** having a core and a cladding layer that clads the core, wherein
the chemical formula of the core is the following Formula 1,
NaₓMn[Fe(CN)₆]_{δ}·zH₂O Formula 1
wherein 0<x≤2, 0<δ≤1, and 0≤z≤10,
the chemical formula of the cladding layer is the following Formula 2,
A_{y}Mn[Fe(CN)₆]_{α}·wH₂O Formula 2
wherein the A is an alkali metal element other than sodium, and 0<y≤2, 0<α≤1, and 0≤w≤10.

2. The prussian blue analog having a core-shell structure according to claim1 , **characterized in that**
the A is at least one of K, Rb and Cs.

3. The prussian blue analog having a core-shell structure according to claim 1 or 2, **characterized in that**
in Formula 1, the 0.7≤δ≤1; and/or
in Formula 1 and Formula 2, the × and y are each independently selected from 0.5-2, optionally 1.5-2.

4. The prussian blue analog having a core-shell structure according to any one of claims 1-3, **characterized in that**
the thickness of the cladding layer is 100nm or less, optionally 60nm or less, more optionally 50nm or less, and optionally in a range of 5nm-40nm, and further optionally in a range of 10nm-20nm, particularly wherein
the cladding amount of the cladding layer is 10 wt% or less, optionally 1wt%-5wt%, more particularly wherein the prussian blue analog has a particle size of 100nm to 50µm.

5. A method for preparing a prussian blue analog having a core-shell structure, **characterized in that**
the method comprises the steps of:
1) adding a prussian blue analog particle to a solvent 1 and dispersing to obtain a suspension, the chemical formula of the prussian blue analog particle being the following Formula 1,
NaₓMn[Fe(CN)₆]_{δ}·zH₂O Formula 1
wherein 0<x≤2, 0<δ≤1, and 0≤z≤10;
2) dissolving a soluble salt containing a transition metal element L, wherein L is Mn, in a solvent 2 to make a solution c;
3) dissolving a soluble salt containing an alkali metal element A other than sodium and a soluble transition metal cyano complex containing a transition metal element M, wherein M is Fe, in a solvent 3 to make a solution d;
4) adding the solutions c and d dropwise to the suspension obtained in step 1) under stirring, and filtering the suspension to obtain a precipitate; and
5) washing and drying the precipitate obtained in step 4) to obtain a prussian blue analog having a core-shell structure, wherein the prussian blue analog having a core-shell structure has a core and a cladding layer that clads the core, the core is the prussian blue analog particle, and the chemical formula of the cladding layer is the following Formula 2,
A_{y}Mn[Fe(CN)₆]_{α}·wH₂O Formula 2
wherein the A is an alkali metal other than sodium, and 0<y≤2, 0<α≤1, and 0≤w≤10.

6. The method according to claim 5, **characterized in that**
the prussian blue analog particle in step 1) is prepared by a method comprising the steps of:
i) dissolving a soluble salt containing P as a transition metal element, wherein P is Mn, and a slow-releasing agent containing Na in water to make a solution a;
ii) dissolving a soluble transition metal cyano complex containing R as a transition metal element, wherein R is Fe, in water to make a solution b;
iii) adding the solution a dropwise to the solution b under stirring, and after the completion of dropwise addition, aging and filtering to obtain a precipitate; and
iv) washing and drying the precipitate obtained in step iii) to obtain the prussian blue analog particle, particularly wherein
the slow-releasing agent containing Na in step i) is at least one selected from sodium citrate, sodium ascorbate, disodium ethylenediamine tetraacetate, tetrasodium ethylenediamine tetraacetate, sodium chloride, sodium sulfate and sodium acetate.

7. The method according to claim 6, **characterized in that**
the soluble transition metal cyano complex in step ii) is a divalent transition metal sodium cyanide.

8. The method according to claim 6 or 7, wherein
in the step iii), the solution is maintained in a temperature range of 20°C-120°C, optionally in a temperature range of 70°C-90°C, and optionally at 80°C.

9. The method according to any one of claims 5-8, **characterized in that**
the respective solvents 1, 2 and 3 in steps 1), 2) and 3) may be the same or different, each being independently selected from at least one of deionized water and an organic solvent, optionally the organic solvent is selected from at least one of alcohol, ketone, and halogenated hydrocarbon, and optionally selected from at least one of methanol, glycerol, acetone, and ethanol, particularly wherein
the soluble transition metal cyano complex in step 3) is a divalent transition metal sodium cyanide.

10. The method according to any one of claims 5-9, **characterized in that**
in step 4), the rates of dropwise addition of the solution c and the solution d are each independently in a range of 0.1 ml/min-10 ml/min, optionally in a range of 0.1 ml/min-5ml/min, and optionally in a range of 0.1 ml/min-2ml/min; or
in step 4), the reaction system is maintained in a temperature range of 20°C-120°C, optionally in a temperature range of 70°C-90°C, and optionally at 80°C, particularly wherein
the A is at least one of K, Rb and Cs.

11. A sodium-ion secondary battery, **characterized by** comprising the prussian blue analog having a core-shell structure of any one of claims 1-4 or a prussian blue analog having a core-shell structure obtained by the method of any one of claims 5-10.

12. A battery module, **characterized by** including the sodium-ion secondary battery of claim 11.

13. A battery pack, **characterized by** including the battery module of claim 12.

14. A powered device, **characterized by** including one or more of the sodium-ion secondary battery of claim 11, the battery module of claim 12 or the battery pack of claim 13.

## Patentansprüche

1. Berliner-Blau-Analogon mit einer Kern-Schale-Struktur, **gekennzeichnet dadurch, dass** es einen Kern und eine Mantelschicht aufweist, die den Kern ummantelt, wobei
die chemische Formel des Kerns die folgende Formel 1 ist,
NaₓMn[Fe(CN)₆]_{δ}·zH₂O Formel 1
wobei 0 < x ≤ 2, 0 < 6 ≤ 1 und 0 ≤ z ≤ 10,
die chemische Formel der Mantelschicht die folgende Formel 2 ist,
A_{y}Mn[Fe(CN)₆]_{α}·wH₂O Formel 2
wobei A ein Alkalimetallelement ist, das nicht Natrium ist, und 0 < y ≤ 2, 0 < α ≤ 1 und 0 ≤ w ≤ 10.

2. Berliner-Blau-Analogon mit einer Kern-Schale-Struktur nach Anspruch 1, **gekennzeichnet dadurch, dass**
A K, Rb und/oder Cs ist.

3. Berliner-Blau-Analogon mit einer Kern-Schale-Struktur nach Anspruch 1 oder 2, **gekennzeichnet dadurch, dass**
in Formel 10,7 < δ ≤ 1 ist; und/oder
in Formel 1 und Formel 2 x und y jeweils unabhängig ausgewählt sind aus 0,5-2, optional aus 1,5-2.

4. Berliner-Blau-Analogon mit einer Kern-Schale-Struktur nach einem der Ansprüche 1-3, **gekennzeichnet dadurch, dass**
die Dicke der Mantelschicht 100 nm oder weniger beträgt, optional 60 nm oder weniger, noch optionaler 50 nm oder weniger, und optional in einem Bereich von 5 nm-40 nm und mehr optional in einem Bereich von 10 nm-20 nm liegt, insbesondere wobei
die Ummantelungsmenge der Mantelschicht 10 Gew.-% oder weniger beträgt, optional 1 Gew.-%-5 Gew.-%, insbesondere wobei das Berliner-Blau-Analogon eine Partikelgröße von 100 nm bis 50 µm aufweist.

5. Verfahren zum Herstellen eines Berliner-Blau-Analogons mit einer Kern-Schale-Struktur, **gekennzeichnet dadurch, dass**
das Verfahren folgende Schritte umfasst:
1) Zugeben eines Berliner-Blau-Analogon-Partikels zu einem Lösungsmittel 1 und Dispergieren, um eine Suspension zu erhalten, wobei die chemische Formel des Berliner-Blau-Analogon-Partikels die folgende Formel 1 ist,
NaₓMn[Fe(CN)₆]_{δ}·zH₂O Formel 1
wobei 0 < x ≤ 2, 0 < 6 ≤ 1 und 0 ≤ z ≤ 10,
2) Auflösen eines löslichen Salzes, das ein Übergangsmetallelement L enthält, wobei L Mn ist, in einem Lösungsmittel 2, um eine Lösung c herzustellen;
3) Auflösen eines löslichen Salzes, das ein Alkalimetallelement A enthält, das nicht Natrium ist, und eines löslichen Übergangsmetall-Cyanokomplexes, der ein Übergangsmetallelement M enthält, wobei M Fe ist, in einem Lösungsmittel 3, um eine Lösung d herzustellen;
4) tropfenweises Zugeben der Lösungen c und d zu der in Schritt 1) erhaltenen Suspension, unter Rühren, und Filtern der Suspension, um einen Niederschlag zu erhalten; und
5) Waschen und Trocknen des in Schritt 4) erhaltenen Niederschlags, um ein Berliner-Blau-Analogon mit einer Kern-Schale-Struktur zu erhalten, wobei das Berliner-Blau-Analogon mit der Kern-Schale-Struktur einen Kern und eine Mantelschicht aufweist, die den Kern ummantelt, der Kern das Berliner-Blau-Analogon-Partikel ist und die chemische Formel der Mantelschicht die folgende Formel 2 ist,
A_{y}Mn[Fe(CN)₆]_{α}·wH₂O Formel 2
wobei A ein Alkalimetallelement ist, das nicht Natrium ist, und 0 < y ≤ 2, 0 < α ≤ 1 und 0 < w ≤ 10.

6. Verfahren nach Anspruch 5, **gekennzeichnet dadurch, dass**
das Berliner-Blau-Analogon-Partikel in Schritt 1) durch ein Verfahren hergestellt wird, das folgende Schritte umfasst:
i) Auflösen eines löslichen Salzes, das P als Übergangsmetallelement enthält, wobei P Mn ist, und eines sich langsam freisetzenden Stoffs, der Na enthält, in Wasser, um eine Lösung a herzustellen;
ii) Auflösen eines löslichen Übergangsmetall-Cyanokomplexes, der R als Übergangsmetallelement enthält, wobei R Fe ist, in Wasser, um eine Lösung b herzustellen;
iii) tropfenweises Zugeben der Lösung a zu der Lösung b unter Rühren und, nach Abschluss des tropfenweisen Zugebens, Altern und Filtern, um einen Niederschlag zu erhalten; und
iv) Waschen und Trocknen des in Schritt iii) erhaltenen Niederschlags, um das Berliner-Blau-Analogon-Partikel zu erhalten, insbesondere wobei
der sich langsam freisetzende Stoff, der Na enthält, in Schritt i) ausgewählt ist aus Natriumcitrat, Natriumascorbat, Dinatrium-ethylendiamin-tetraacetat, Tetranatriumethylendiamin-tetraacetat, Natriumchlorid, Natriumsulfat und/oder Natriumacetat.

7. Verfahren nach Anspruch 6, **gekennzeichnet dadurch, dass**
der lösliche Übergangsmetall-Cyanokomplex in Schritt ii) ein zweiwertiges Übergangsmetall-Natriumcyanid ist.

8. Verfahren nach Anspruch 6 oder 7, wobei
im Schritt iii) die Lösung in einem Temperaturbereich von 20 °C-120 °C gehalten wird, optional in einem Temperaturbereich von 70 °C-90 °C und optional bei 80 °C.

9. Verfahren nach einem der Ansprüche 5-8, **gekennzeichnet dadurch, dass**
die jeweiligen Lösungsmittel 1, 2 und 3 in den Schritten 1), 2) und 3) gleich oder unterschiedlich sein können, wobei jedes unabhängig ausgewählt ist aus deionisiertem Wasser und/oder einem organischen Lösungsmittel, wobei das organische Lösungsmittel optional ausgewählt ist aus Alkohol, Keton und/oder halogeniertem Kohlenwasserstoff und optional aus Methanol, Glycerin, Aceton und/oder Ethanol ausgewählt ist, insbesondere wobei
der lösliche Übergangsmetall-Cyanokomplex in Schritt 3) ein zweiwertiges Übergangsmetall-Natriumcyanid ist.

10. Verfahren nach einem der Ansprüche 5-9, **gekennzeichnet dadurch, dass**
im Schritt 4) die Raten des tropfenweisen Zugebens der Lösung c und der Lösung d unabhängig voneinander in einem Bereich von 0,1 ml/min-10 ml/min liegen, optional in einem Bereich von 0,1 ml/min-5 ml/min und optional in einem Bereich von 0,1 ml/min-2 ml/min; oder
im Schritt 4) das Reaktionssystem in einem Temperaturbereich von 20 °C-120 °C gehalten wird, optional in einem Temperaturbereich von 70 °C-90 °C und optional bei 80 °C, insbesondere wobei
A K, Rb und/oder Cs ist.

11. Natriumionen-Sekundärbatterie, **gekennzeichnet dadurch, dass** sie ein Berliner-Blau-Analogon mit einer Kern-Schale-Struktur nach einem der Ansprüche 1-4 oder ein Berliner-Blau-Analogon mit einer Kern-Schale-Struktur aufweist, das durch das Verfahren nach einem der Ansprüche 5-10 erhalten wurde.

12. Batteriemodul, **gekennzeichnet dadurch, dass** es die Natriumionen-Sekundärbatterie nach Anspruch 11 aufweist.

13. Batteriepack, **gekennzeichnet dadurch, dass** er das Batteriemodul nach Anspruch 12 aufweist.

14. Angetriebene Einrichtung, **gekennzeichnet dadurch, dass** sie die Natriumionen-Sekundärbatterie nach Anspruch 11, das Batteriemodul nach Anspruch 12 und/oder den Batteriepack nach Anspruch 13 aufweist.

## Revendications

1. Analogue du bleu de Prusse ayant une structure noyau-enveloppe, **caractérisé en ce qu'**il comporte un noyau et une couche d'enrobage qui recouvre le noyau, dans lequel
la formule chimique du noyau est la Formule 1 suivante,
NaₓMn[Fe(CN)₆]_{δ} zH₂O Formule 1
dans laquelle 0<x≤2, 0<δ≤1, et 0≤z≤10,
la formule chimique de la couche d'enrobage est la Formule 2 suivante,
A_{y}Mn[Fe(CN)₆]_{α} wH₂O Formule 2
dans laquelle A est un élément de métal alcalin autre que le sodium, et 0<y≤2, 0<α≤1, et 0≤w≤10.

2. L'analogue du bleu de Prusse ayant une structure noyau-enveloppe selon la revendication 1, **caractérisé en ce que**
A est au moins l'un parmi K, Rb et C.

3. L'analogue du bleu de Prusse ayant une structure noyau-enveloppe selon la revendication 1 ou 2, **caractérisé en ce que**
dans la Formule 1, 0.7≤ δ≤1; et/ou
dans les Formule 1 et Formule 2, x et y sont chacun choisis indépendamment de 0.5 à 2, éventuellement de 1.5 à 2.

4. L'analogue du bleu de Prusse ayant une structure noyau-enveloppe selon l'une quelconque des revendications 1-3, **caractérisé en ce que**
l'épaisseur de la couche d'enrobage est de 100 nm ou moins, éventuellement de 60 nm ou moins, plus en option 50 nm ou moins, et en option dans une plage de 5 nm à 40 nm, et en outre éventuellement dans une plage de 10 nm à 20 nm, dans lequel particulièrement
la quantité d'enrobage de la couche d'enrobage est de 10 % en poids ou moins, éventuellement de 1 % en poids à 5 % en poids, plus particulièrement dans lequel l'analogue du bleu de Prusse présente une taille de particule de 100 nm à 50 µm.

5. Procédé de préparation d'un analogue du bleu de Prusse ayant une structure noyau-enveloppe, **caractérisé en ce que**
le procédé comprend les étapes suivante:
1) ajouter une particule analogue du bleu de Prusse à un solvant 1 et disperser pour obtenir une suspension, la formule chimique de la particule analogue du bleu de Prusse étant la Formule 1 suivante,
NaₓMn[Fe(CN)₆]_{δ} zH₂O Formule 1
dans laquelle 0<x≤2, 0<δ≤1, et 0≤z≤10;
2) dissoudre un sel soluble contenant un élément de métal de transition L, dans lequel L correspond à Mn, dans un solvant 2 pour préparer une solution c;
3) dissoudre un sel soluble contenant un élément métallique alcalin A autre que le sodium et un complexe cyano de métal de transition soluble contenant un élément de métal de transition M, dans lequel M correspond à Fe, dans un solvant 3 pour préparer une solution d;
4) ajouter les solutions c et d goutte à goutte à la suspension obtenue à l'étape 1) en les remuant, et filtrer la suspension pour obtenir un précipité; et
5) laver et sécher le précipité obtenu à l'étape 4) pour obtenir un analogue du bleu de Prusse ayant une structure noyau-enveloppe, dans lequel l'analogue du bleu de Prusse ayant une structure noyau-enveloppe a un noyau et une couche d'enrobage qui recouvre le noyau, le noyau étant la particule analogue du bleu de Prusse, et la formule chimique de la couche d'enrobage est la Formule 2 suivante,
A_{y}Mn[Fe(CN)₆]_{α} wH₂O Formule 2
dans laquelle A est un élément de métal alcalin autre que le sodium, et 0<y≤2, 0<α≤1, et 0≤w≤10.

6. Le procédé selon la revendication 5, **caractérisé en ce que**
la particule analogue du bleu de Prusse à l'étape 1) est préparée par un procédé comprenant les étapes suivantes:
i) dissoudre un sel soluble contenant du P comme élément de métal de transition, dans lequel P correspond à Mn, et un agent à libération lente contenant du Na dans l'eau pour préparer une solution a;
ii) dissoudre un complexe cyano de métal de transition soluble contenant R comme élément de métal de transition, dans lequel R correspond à Fe, dans l'eau pour préparer une solution b;
iii) ajouter la solution a goutte à goutte à la solution b en les agitant, et après l'achèvement de l'addition goutte à goutte, vieillir et filtrer pour obtenir un précipité; et
iv) laver et sécher le précipité obtenu à l'étape iii) pour obtenir la particule analogue du bleu de Prusse, dans lequel particulièrement
l'agent à libération lente contenant Na à l'étape i) est au moins un agent choisi parmi le citrate de sodium, l'ascorbate de sodium, l'éthylènediamine tétraacétate disodique, l'éthylènediamine tétraacétate tétrasodique, le chlorure de sodium, le sulfate de sodium et l'acétate de sodium.

7. Le procédé selon la revendication 6, **caractérisé en ce que**
le complexe cyano de métal de transition soluble à l'étape ii) est un cyanure de sodium de métal de transition divalent.

8. Le procédé selon la revendication 6 ou 7, dans lequel
à l'étape iii), la solution est maintenue dans une plage de température de 20°C à 120°C, en option dans une plage de température de 70°C à 90°C, et éventuellement à 80°C.

9. Le procédé selon l'une quelconque des revendications 5 à 8, **caractérisé en ce que**
les solvants respectifs 1, 2 et 3 aux étapes 1), 2) et 3) peuvent être identiques ou différents, chacun étant sélectionné indépendamment parmi au moins l'un entre l'eau désionisée et un solvant organique, éventuellement le solvant organique est choisi parmi au moins l'un parmi l'alcool, la cétone et l'hydrocarbure halogéné, et éventuellement choisi parmi au moins l'un parmi le méthanol, le glycérol, l'acétone et l'éthanol, dans lequel particulièrement
le complexe cyano de métal de transition soluble à l'étape 3) est un est un cyanure de sodium de métal de transition divalent.

10. Le procédé selon l'une quelconque des revendications 5 à 9, **caractérisé en ce que**
à l'étape 4), les débits d'addition goutte à goutte de la solution c et de la solution c sont chacun indépendamment compris dans une plage de 0,1 ml/min à 10 ml/min, en option dans une plage de 0,1 ml/min à 5 ml/min, et en option dans une plage de 0,1 ml/min à 2 ml/min, ou
à l'étape 4), le système de réaction est maintenu dans une plage de température de 20°C à 120°C, en option dans une plage de température de 70°C à 90°C, et en option à 80°C, dans lequel particulièrement
A est au moins l'un parmi K, Rb et Cs.

11. Une batterie secondaire sodium-ion, **caractérisée en ce qu'**elle comprend l'analogue du bleu de Prusse ayant une structure noyau-enveloppe selon l'une quelconque des revendications 1 à 4 ou un analogue du bleu de Prusse ayant une structure noyau-enveloppe obtenue par le procédé selon l'une quelconque des revendications 5 à 10.

12. Un module de batterie, **caractérisé en ce qu'**il comprend la batterie secondaire sodium-ion selon la revendication 11.

13. Un bloc de batterie, **caractérisé en ce qu'**il comprend le module de batterie selon la revendication 12.

14. Un dispositif alimenté, **caractérisé en ce qu'**il comprend un ou plusieurs éléments parmi la batterie secondaire sodium-ion selon la revendication 11, le module de batterie selon la revendication 12 ou le bloc de batterie selon la revendication 13.
